# EUROPEAN PATENT SPECIFICATION

(11) **EP 4 314 445 B1**
(45) Date of publication and mention of the grant of the patent: **25.12.2024**
(21) Application number: 21735631.0
(22) Date of filing: 18.06.2021
(51) Int. Cl.: B23D 17/00, E02F 9/28, E04G 23/08, B23D 31/00, E02F 3/96, B23D 35/00

(54) **SINGLE BODY DEMOLITION SHEAR BLADE**
EINTEILIGE ABBRUCHSCHERKLINGE
LAME DE CISAILLE DE DÉMOLITION À CORPS UNIQUE

(30) Priority: 24.03.2021 GB 202104116
(43) Date of publication of application: 07.02.2024
(73) Proprietor: Alpha Machine Knife Company Limited, Rotherham South Yorkshire S60 1LH (GB)
(72) Inventor: SMALLEY, Craig, Rotherham South Yorkshire S60 1LH (GB)
(74) Representative: Franks & Co Limited
(86) International application number: PCT/EP2021/066692
(87) International publication number: WO 2022/199863

(56) References cited:
- EP-A1- 1 939 362
- EP-A1- 2 581 506
- EP-A1- 3 121 340
- US-A1- 2005 091 852

## Description

### Field of the Invention

The present invention relates to a blade for a demolition attachment, preferably although not exclusively, a blade for receiving the tang of a moveable jaw of a demolition shear therein.

### Background of the Invention

The invention relates to a blade for a demolition shears which are primarily, although not exclusively, used for demolishing steel structures, and the preparation of bulk scrap metal by piercing and cutting. Typically, a demolition shear blade (interchangeably called the boot blade or tip) may be mounted to a demolition shear that is attached to an excavator or vehicle e.g. a tractor unit. Various blade mounting arrangements are known for attaching a shear blade to the tang of the moveable jaw of an excavator or similar equipment, these include simple weld-on tips and sophisticated blade and wear plate configurations.

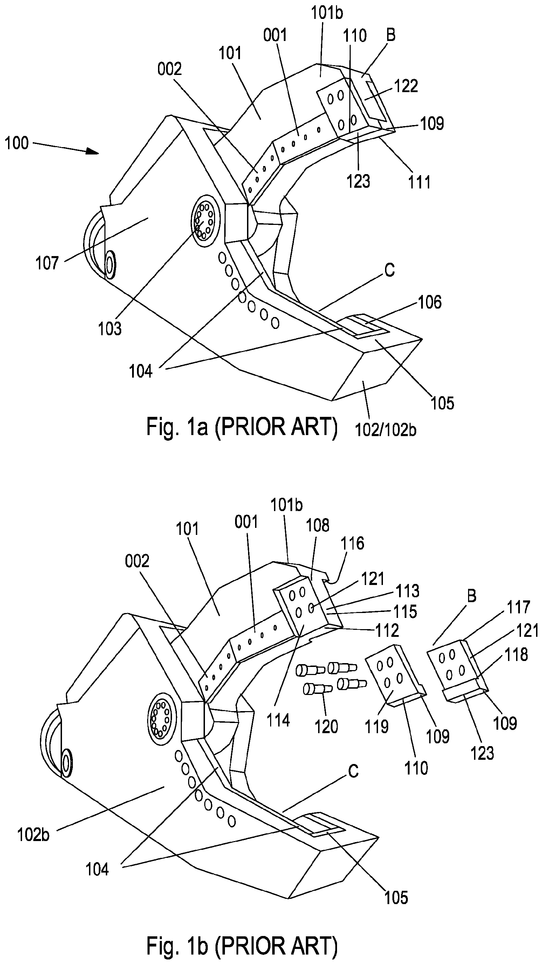

A known two-piece, single piercing tip demolition shears and shear blade arrangement 100 is illustrated in Figures 1a and 1b and comprises: an upper moveable jaw 101 and a co-operable lower fixed jaw 102. The upper moveable jaw 101 being pivotally attached to the lower jaw by a pivot pin, extending pivot axis, hinge mechanism or equivalent 103 which may be driven by a hydraulic or pneumatic linear actuator such that the upper jaw is moveable with respect to the lower fixed jaw to open and close the shears.

The fixed jaw 102 comprises a main body 102b and a set of blades seated in a recesses within the jaw. The blade set including: two main blades 104, a razor or end blade 105 and two guide blades 106 each detachably mounted to the main body 102b by bolts. The main blade 104 and the guide blade being arranged at substantially opposing sides of the main body 102b, whilst the razor blade 105 extends transversely from the main blade 105 towards the guide blade 106. The boundaries set by the fixed lower jaw blade set 104, 105 and 106 defining a cavity c to receive the upper jaw.

The upper moveable jaw 101 comprises first and second main blades 001, 002 mounted on a side of the main body 101b of the upper jaw. A two-part shear blade *B* is mounted on a front projection of the main body. The shear blade *B* provides a shearing or cutting action when working against the blades of the fixed jaw. The two-part shear blade *B* having: a piercing edge 109, a shearing edge 110 and a guide-side edge 111. The piercing edge 109 being the outer limit of the blade, though which the maximum force of piercing is applied. The shearing edge 110 being an edge which mates or engages with another edge, typically the main blade 104 on the opposing fixed jaw 102, so as to make a shearing or cutting action. The shearing blade defining at least one shearing edge 110 which in use is presented for shearing. The guide-side edge functions to align the narrower upper jaw as it moves within the cavity c of the lower jaw.

The two-part blade *B* of the upper moveable jaw is attached to a front projection, called the tang 108 of the moveable jaw. The tang 108, is narrower in height and width than the main body 101b of the upper jaw from which it projects, and comprises a lower surface 112, two opposing side surfaces 113, 114 and a bridging front surface 115. A stepped surface 116 is present providing a visual demarcation at the transition between the wider dimensions of the main body 101b of the upper jaw and the narrower tang 108 and providing an abutment for the upper walls 117 of the blade *B.* The first 118 and second 119 blades surround a portion of the tang 108 and fixings 120 are inserted through complementary apertures 121 in the tang and the blades to attach the blades to the tang. In use, the moveable jaw closes towards the fixed jaw to pierce or cut materials between the blades of the upper and lower jaws. The blades are consumable items which perform the cutting, whilst typically protecting the jaw of the shear.

It is a limitation of the arrangement shown in Figures 1a and 1b that only a single piercing edge 109 is provided and thus the blade has to be replaced frequently. The multi-blade assembly is costlier during production requiring precision machining of first and second blades and often manual filing of the first and second blades to ensure compatibility. In use, the two-part assembly encases a portion of the tang, meaning that a portion 122 of the bridging front face 115 of the tang 108 is not adequately protected by the blade B and thus is subject to being damaged during shearing. Moreover, the two-part blade assembly (118;119) has a line of weakness correlating to the join line 123 between the first and second blades. This join line is prone to separation on impact and can result in blade separation and/or blade breakage, with potential to cause damage to the tang.

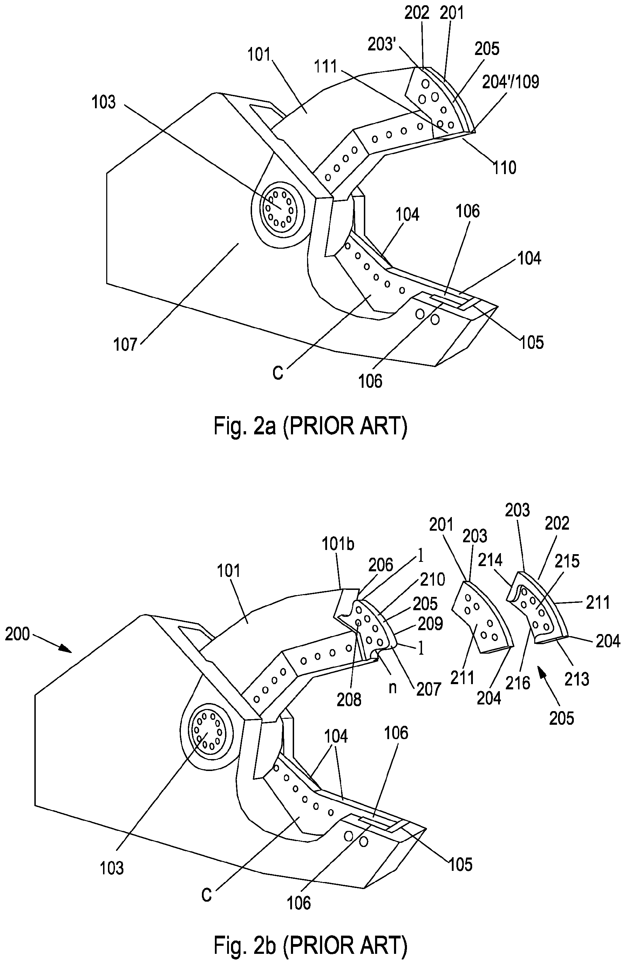

Double-edged demolition shear blades are known e.g. WO 2019/209537, however, these are also a two-part blade assembly to ensure a tight fit around the tang of the moving jaw. A representative double-edged shear blade is illustrated mounted on a shear in Figures 2a and 2b, 200. The shears comprising a moveable upper jaw 101 and pivotally connected co-operable lower fixed jaw 102. All remaining nomenclature is as per Figures 1a and 1b. The two-part blade comprising first 201 and second 202 blades, each having a first 203 and second 204 piercing edges which surrounds the tang 205 of the upper moveable jaw 101 to form two piercing edges 203', 204'.

The tang 205 of the upper moving jaw having an upper surface 206, a lower surface 207, two parallel opposing side surfaces 208 and 209 and a front surface 210. The tang 205 extending from the point of attachment to the upper jaw body 101b into two distinct lobes *l*. The tang being symmetrical about its vertical axis. Each of the first 201 and second 202 blades having a first surface 211 from which an upper 212, lower 213, and side wall 214 extend transversely to define at least one cavity 215 for receiving the tang of the moving jaw therein. The cavity being narrower towards the open end 216 of the first surface 211 to fit and close tightly around the narrow neck n when the tang meets the body of the moveable arm 101b. It will be readily understood that there may be more than one cavity, if for example an intermediate partitioned wall is used to space first and second longitudinal sides.

The internal dimensions of the open end 216 of cavity 215 formed between the first 201 and second 202 part is smaller than the external dimensions of the lobed portion of the tang. Subsequently, a two-piece blade assembly is required as it is not possible to fit a single piece over the lobes of the tang and still achieve a close fit to the neck of the tang. A close fit to the neck of the tang is required to increase strength.

As with all two-part blade assemblies, a line of weakness is present at the join line 205 between the first and second parts. It is a limitation that manual filing may be required to achieve compatibility between first and second parts. Further problems associated with two-part blade assemblies include blade separation and/or blade breakage with the potential to cause damage to the tang. The nature of clamping a two-part blade assembly to the tang of an apparatus, results in excessive friction caused between the tip blades and the tang. Over a period of time, the friction causes the tang width dimensions to erode and reduce, requiring costly maintenance of the tang. EP1939362A1 and EP3121340A1 disclose a single body piece blade for a demolition shear.

Consequently, it is an object of the invention to provide a blade with increased strength which does not include a join line, which is more economical to produce, reduces friction on the tang and which presents more than one piercing tip so that it can be reused. This and other objects are achieved by a blade according to claim 1.

### Summary of the Invention

This invention specifically relates to a cutting and piercing portion, or blade, that mounts to the tang of the moveable jaw of a shear. Preferably, the cutting and piercing portion is formed from hardened or pre-hardened steel. The blade may be interchangeably called a 'tip' or 'boot' blade. The design is for a single piece, indexable or repositionable boot blade that substantially or completely shrouds the tang of the moveable jaw. The blade having five-walls: the first and second walls being longitudinal sides; the third and fourth walls being ends.

The blade is a single piece and defines a first and a second piercing tip such that the blade is reversible and may be reused.

According to the present invention, there is provided a blade for a demolition shear according to claim 1.

Preferably, said first end wall has a first end wall thickness, and said second end wall has a second end wall thickness, and each of said first and second longitudinal side walls extend over a distance in a direction between said first and second end walls, which is greater than a thickness of said first end wall and greater than a thickness of said second end wall.

The blade for demolition shear may have a front wall thickness, and each of said first and second longitudinal side walls extend over a distance in a direction perpendicular to a front face of said front wall, which is greater than said front wall thickness.

Preferably, the first and second sides are arranged in parallel, directly opposite one another.

Preferably the first second side walls are located opposite each other, and spaced apart from each other. Preferably at least one of said end walls has a thickness which varies to provide a said protrusion, a first portion of a said end wall which lies adjacent a front wall of said blade being relatively thinner than a second portion of said end wall which lies adjacent an open mouth of said blade, wherein the first wall portion lies between the second wall portion and front wall, where the thickness of the end wall is the distance between an outer face of the end wall and an inner face of the end wall which faces into the cavity surrounded by the first and second end walls, first and second side walls and the front wall. The thickness of the second end wall portion when viewed in cross section in a direction perpendicular to a plane which extends between the first and second end walls and which bisects the front wall forms a bulge at the second end wall portion compared to the first end wall portion.

According to the invention both end walls comprise a said protrusion.

Advantageously, the blade is indexable between a first and a second position by rotation of the blade body by 180° to provide two piercing tips in the same single body.

Preferably, the blade is symmetrical.

Alternatively, the blade may be asymmetrical. It is envisaged that the front wall extends continuously between said first and second end walls and continuously between said first and second longitudinal side walls.

It is envisaged that the blade comprises first and second shearing edges.

The blade comprises first and second guide edges.

The front wall of the blade may comprise a convex outwardly facing surface extending between said first and said second piercing tips.

The front wall of the blade may comprise a curve or series of flat faces or a combination of curved and flat outwardly facing surfaces extending between said first and said second piercing tips.

The first longitudinal wall comprises an inner face and said second longitudinal wall comprises an inner face.

Preferably, the inner face of the first longitudinal wall and the inner face of the second longitudinal wall face each other across at least one cavity.

The first end wall and the second end wall comprise inner surfaces.

Preferably, the inner surface of the first end wall and the inner surface of the second end wall face each other across the at least one cavity.

Preferably, the blade body comprises 8 vertices.

Preferably, the first piercing tip comprises an edge between the first end wall and the front wall.

Optionally, the first piercing tip comprises a curved surface between the first end wall and the front wall.

Optionally, the first piercing tip comprises a flat surface between the first end wall and the front wall.

Optionally, the second piercing tip comprises an edge between the second end wall and the front wall.

Optionally, the second piercing tip comprises a curved surface between the second end wall and the front wall.

Optionally, the second piercing tip comprises a flat surface between the second end wall and the front wall.

The blade body comprises at least one aperture for receiving a fixing there through for securing the blade to the tang of a moveable jaw.

Preferably, the apertures have a diameter of 20 to 80mm.

Preferably, the blade body comprises three apertures for receiving a fixing there through for securing the blade to the tang of a moveable jaw.

Preferably, the at least one aperture for receiving a fixing there through is located on the first or second side wall of the blade.

Optionally, the at least one aperture for receiving a fixing there through is located on the front wall of the blade body.

Preferably, the at least one aperture for receiving a fixing there through is threaded, this ensures a secure fit between the fixing and the blade. Alternatively, the tang may be threaded to ensure a secure fit between the tang and the blade.

Preferably, when fitted, the front wall encloses an entire lower surface, two opposing side surfaces, upper surface and bridging front surface of a tang of the moveable jaw, shroud the tang and prevent the tang from damage.

Preferably, the blade body is formed as a precision machined single part, this is advantageous as it prevents join line or points of weakness. More preferably, although not exclusively, the blade body is formed from a precision machined steel bar as a single part.

Optionally, the body is formed as a single welded fabrication, a single casting or is 3D-printed.

Preferably, said at least one cavity comprises an open ended mouth portion having an inner perimeter extending around said mouth portion, which is smaller than an inner perimeter extending around a main body of said cavity as viewed in a direction perpendicular to an inwardly facing surface of said front wall.

Preferably the convex protruding portions form a relatively narrower entrance to the cavity than the dimensions inside the cavity, and form a "pinch point" for entry of the tang of the shear machine to the inside of the cavity.

According to the invention said first and second end walls comprise an inwardly facing curved protrusion which faces inwardly into said at least one cavity. The inwardly facing curved protrusions lock the blade to the tang so that it cannot be pulled off in a horizontal plane i.e. if the machine operator drags the tip of the blade on the floor the blade will not detach from the tang.

Preferably said at least one cavity is open ended.

Each of said first and second end walls comprises a corresponding respective inwardly facing curved protrusion which faces inwardly into said at least one cavity. Alternatively, each of said first and second end walls comprises a corresponding respective inwardly facing angled flat protrusion which faces inwardly into said at least one cavity.

Preferably, the front wall of the blade comprises three flat surfaces or faces extending between said first and said second piercing tips.

Optionally, the front wall of the blade comprises two flat surfaces, or faces.

Preferably, said two flat surfaces are arranged at an angle into a ridge.

It is envisaged that the first end wall comprises a series of flats.

Optionally, the second end wall comprises a series of flats and a radii.

A tang, not according to the invention, of a moveable jaw co-operable with the blade for a demolition shear is also disclosed.

A kit of parts comprising a blade for a demolition shear according to the present invention and fixings is also claimed.

Preferably, the fixings are selected from any of the following: bolts; complementary male and female threaded bolts; barrel nuts and fixing bolts; dowels; fitted bolts or dowels and spring clips.

A demolition shear comprising a blade for a demolition shear according to the invention is also claimed.

There is disclosed a single body indexable, demolition shear blade comprising: a blade body, the blade body comprising a cavity for receiving the tang of a moveable jaw of a demolition shear therein; the blade body having spaced apart first and second ends which form first and second piercing tips respectively. The indexable demolition shear blade being removably attachable to a jaw of a demolition shear in either a first or a second position. The indexable demolition shear blade being rotatable 180° between said first and second position; wherein, in said first position, the first piercing tip is presented for piercing use and in the second position the second piercing tip is presented for piercing use; and in either the first or the second position, the single body demolition shear blade substantially shrouds the tang of said moveable jaw of a demolition shear.

In the embodiments the convex protruding portions bulge inwardly towards the centre of the cavity, in a direction towards the centre of the cavity. The inwardly facing surfaces of the first and second end walls in the region adjacent the front wall form a pair of internal lobes within the cavity inside the main body of the blade extend outwardly away from the centre of the cavity, so that a minimum distance between the surfaces of the opposing convex protruding portions which line the cavity of the blade is less than a maximum distance between the surfaces of the internal lobe sections when measured in a direction which extends between the third and fourth outer walls (end walls) respectively at each end of the blade. The surface of the convex protrusion follows a smooth curve, where the curve extends in a plane which bisects the front wall and each of the end walls.

The convex protrusions in various of the embodiments shown herein extend fully and continuously between the first and second sidewalls of the blade, and are formed on the rear inwardly facing portion of the respective first and second end walls so that a first end wall and a first convex protrusion form a first thickness of material and similarly, a second end wall and a second convex protrusion form a second thickness of material. According to the invention the blade is formed of a single piece of material, for example either as a casting or as a machined component from a single block of metal.

However in alternative embodiments, the convex protrusions need not extend continuously and fully all the way across the ends of the cavity internally between the first and second sidewalls, but may be positioned on the inwardly facing part of the end walls at any lateral position between the first and second sidewalls. In some embodiments, the lateral width of the curved protrusions may be narrower than the distance between the insides of the sidewalls. In the embodiment shown, the convex protrusions have a smooth curved surface, but in other embodiments, the convex protrusions may be formed from one or a plurality of flat faces angled with respect to each other, where each flat face is located on a tangent to an overall curve, where the curve extends in a plane parallel to a plane which bisects the front wall and each of the end walls.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figures 1a and 1b herein illustrate schematically a representative two-part single edge demolition blade and shears assembly (prior art).
Figures 2a and 2b herein illustrate schematically a representative two-part double edge demolition blade and shears assembly (prior art).
Figure 3a herein illustrates schematically a perspective view of a blade for a demolition shear and shears assembly in accordance with a first embodiment of the present invention.
Figure 3b herein illustrates schematically an alternative perspective view of a blade for a demolition shear and shears assembly in accordance with a first embodiment of the present invention.
Figures 4a and 4b herein illustrate schematically a perspective view of a blade for a demolition shear and fasteners in accordance with a first embodiment of the present invention.
Figure 5 herein illustrates schematically a perspective exploded view of blade for a demolition shear and fasteners in accordance with a first embodiment of the present invention being fitted to the moving upper jaw of a demolition shears.
Figure 6 herein illustrates schematically a rear perspective view of a blade for a demolition shear in accordance with a first embodiment of the present invention.
Figure 7a herein illustrates schematically a cross-sectional view of a blade for a demolition shear, along axis A of Figure 6 in accordance with a first embodiment of the present invention.
Figure 7b herein illustrates schematically a blade for a demolition shear, looking along axis X-X of Figure 7a in accordance with a first embodiment of the present invention.
Figure 7c herein illustrates schematically a blade for a demolition shear, along axis B-B of Figure 7a in accordance with a first embodiment of the present invention.
Figure 8 herein illustrates schematically an exploded view of a blade for a demolition shear, in accordance with a first embodiment of the present invention being fitted to the tang of a moveable jaw.
Figure 9a herein illustrates a cross-sectional view along axis A of Figure 6 highlighting the pressure points upon entry of the blade for a demolition shear into a demolition surface.
Figure 9b herein illustrates a cross-sectional view along axis A of Figure 6 highlighting the pressure points upon withdrawal of the blade for a demolition shear into a demolition surface.
Figures 10a and 10b herein illustrate schematically a perspective view of a blade for a demolition shear and fasteners in accordance with a second embodiment of the present invention.
Figure 11 herein illustrates schematically a perspective partially exploded view of a blade for a demolition shear and fasteners in accordance with a second embodiment of the present invention, being fitted to the moving upper jaw of a demolition shears.
Figures 12a and 12b herein illustrate schematically a perspective view of a blade for a demolition shear and fasteners in accordance with a third embodiment of the present invention.
Figure 13 herein illustrates schematically a perspective partially exploded view of a blade for a demolition shear and fasteners in accordance with a third embodiment of the present invention, being fitted to the moving upper jaw of a demolition shears
Figures 14a and 14b herein illustrate schematically a perspective view of a blade for a demolition shear and fasteners in accordance with a fourth embodiment of the present invention.
Figure 15 herein illustrates schematically a perspective partially exploded view of a blade for a demolition shear and fasteners in accordance with a fourth embodiment of the present invention, being fitted to the moving upper jaw of a demolition shears.
Figure 16 herein illustrates schematically an exploded view of a blade for a demolition shear, in accordance with a fourth embodiment of the present invention being fitted to the tang of a moveable jaw.
Figure 17a herein illustrates schematically a rear perspective view of a blade for a demolition shear in accordance with a fifth embodiment of the present invention.
Figure 17b herein illustrates schematically a front perspective view of a blade for a demolition shear in accordance with a fifth embodiment of the present invention.
Figure 18 herein illustrates schematically a cross-sectional view of a blade for a demolition shear, along axis A-A of Figure 17 in accordance with a fifth embodiment of the present invention.
Figure 19a herein illustrates schematically a view of a blade for a demolition shear, along axis A-A of Figure 17 in accordance with a fifth embodiment of the present invention.
Figure 19b herein illustrates schematically a cross-sectional view of a blade for a demolition shear, along axis B-B of Figure 17 in accordance with a fifth embodiment of the present invention.
Figure 20a herein illustrates schematically a first front perspective view of a blade for a demolition shear in accordance with a sixth embodiment of the present invention.
Figure 20b herein illustrates schematically a second front perspective view of a blade for a demolition shear in accordance with a sixth embodiment of the present invention.
Figure 20c herein illustrates schematically a first rear perspective view of a blade for a demolition shear in accordance with a sixth embodiment of the present invention.
Figure 20d herein illustrates schematically a second rear perspective view of a blade for a demolition shear in accordance with a sixth embodiment of the present invention.
Figure 21 herein illustrates schematically a front exploded perspective view of a blade for a demolition shear and a corresponding tang of a moving jaw in accordance with a seventh embodiment of the present invention.
Figure 22 herein illustrates schematically a rear exploded perspective view of a blade for a demolition shear and a corresponding tang of a moving jaw in accordance with a seventh embodiment of the present invention.
Figure 23 herein illustrates schematically a cut through view of a blade for a demolition shear and a corresponding fixings in accordance with a seventh embodiment of the present invention.
Figure 24 herein illustrates schematically a partial cut through view of a tang, not according to the invention, of a moving jaw compatible with a blade according to the seventh embodiment of the present invention.
Figures 25a, 25b and 25c herein illustrate schematically first second and third exploded perspective views of a blade for a demolition shear and a corresponding fixings in accordance with an eighth embodiment of the present invention.
Figures 26a, 26b, 26c and 26d herein illustrate schematically; a first perspective view, a first side view, a second perspective view and a second side view of blade for a demolition shear and a corresponding fixings fitted to the tang of a machine tool in accordance with an eighth embodiment of the present invention
Figure 27a herein illustrates schematically a cross-sectional view of a blade for a demolition shear, in accordance with an eighth embodiment of the present invention.
Figure 27b herein illustrates schematically a blade for a demolition shear, along axis X-X of Figure 27a in accordance with an eighth embodiment of the present invention.
Figure 27c herein illustrates schematically a blade for a demolition shear, along axis B-B of Figure 27a in accordance with an eighth embodiment of the present invention.
Figure 28a herein illustrates schematically a perspective view of a blade for a demolition shear and shears assembly in accordance with an eighth embodiment of the present invention.
Figure 28b herein illustrates schematically an alternative perspective view of a blade for a demolition shear and shears assembly in accordance with an eighth embodiment of the present invention.
Figures 29a and 29b herein illustrate schematically first and a second side views of an alternative tang arrangement compatible with any of the first, second, third, fourth or sixth embodiments of the present invention.
Figures 30a, 30b, 30c and 30d herein illustrate schematically first, second third and fourth perspective views of blade for a demolition shear in accordance with a ninth embodiment of the present invention.
Figures 31a, 31b and 31c herein illustrate schematically a rear view, and first and second cut-through views of blade for a demolition shear in accordance with a ninth embodiment of the present invention.
Figures 32a, 32b, 32c and 32d herein illustrate schematically a perspective view, a first and second cut-through view and a front view of blade for a demolition shear in accordance with a tenth embodiment of the present invention.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description. Common features are denoted by the same nomenclature throughout.

In this specification the term demolition shear blade will also be understood to include a scrap processing shear blade.

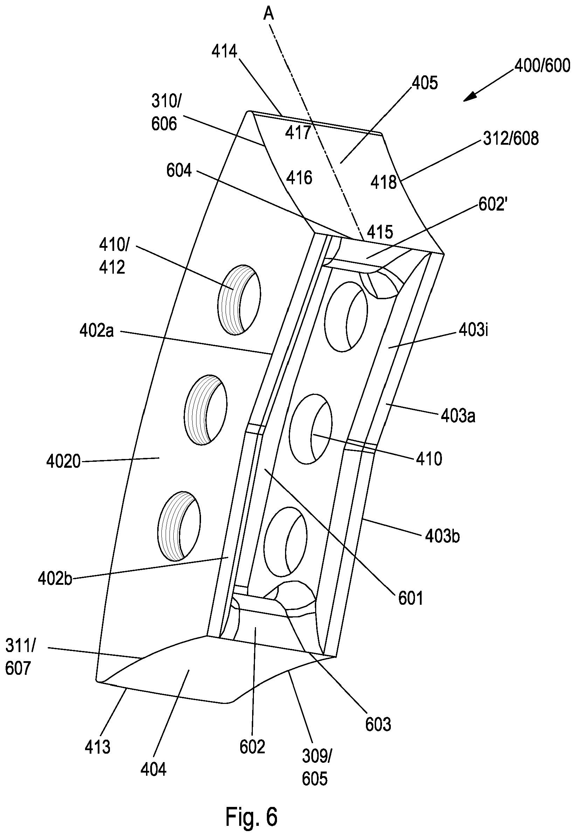

The term 'blade' will be understood to be the structure examples of which are as shown in Figures 6, 7a, 7b, 7c, 17, 18, 19a and 19b independently of the fastenings used.

The invention herein is described as being an indexable blade for a demolition shears but it will be readily understood that the blade may be used with any of the following: machine tool; a moveable arm of a vehicle.

The terms fixings or fasteners will be understood to be any item which holds or secures the blade in position on the tang or a moving jaw of a machine/vehicle. Examples of fastenings comprise but are not limited to bolts, retaining pins, barrel nuts and spring clips, cotter pins or the like.

The term 'wall' will be understood to refer to any three-dimensional form having a height, a width and a depth. Longitudinal walls will be understood to run the length of the blade body.

A wall comprises one or more sides. A side may have one or more surfaces. The term 'face' will be understood to mean any flat or planar surface.

Single-piece will be understood to be any body formed without any joints, parts or loose pieces in its construction, i.e. any solid one-part component. For example, a cast moulded piece, machined piece, precision machined part, 3D printed part or fabricated construction of welded parts to form a one part blade. Indexable will be understood to mean an object which can be indexed, or rotated.

The term cavity will be understood to refer to an opening or space within the blade body, this may be interchangeably called a recess, or aperture and is considered to be any area capable of receiving the tang of a moveable jaw or machine tool therein. At least one cavity will be understood to include a partitioned cavity or a cavity having webbing therein.

The term protrusion will be readily understood to mean a bulge, projection, protuberance or part which sticks out from the walls of the blade. The protrusion may thus be considered a portion which sticks out from the general mass of a blade wall, preferably, from one or more end walls.

The invention is a demolition shear blade, specifically a tip blade comprising a solid blade, which can be rotated and provides two edges for shearing. Preferably, the shear blade will have a width in the range 50mm to 400mm, preferably 70mm to 160mm, a depth in the range of 70mm to 300mm, preferably 70mm to 150mm and a tip to tip length (or height) in the range of 100mm to 600m to preferably 350 to 500mm.

Advantageously, the demolition blade of the present invention can be rotated to provide two edges for shearing, and is a join line free, single-piece which shrouds the entire tang, to allow for maximum results whilst piercing.

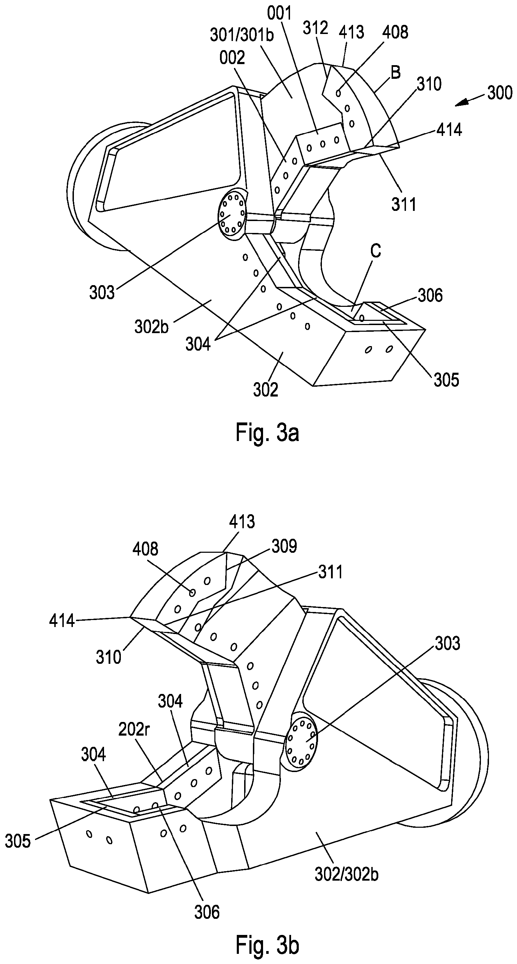

Referring to Figures 3a and 3b herein there are illustrated schematically first and second perspective views 300 of a single-piece blade for a demolition shear and shears assembly in accordance with a first embodiment of the present invention.

The demolition shears comprise an upper moveable jaw 301/501 and a co-operable lower stationary jaw 302. The upper moveable jaw 301 being pivotally attached to the fixed lower jaw by a hydraulically or pneumatically driven pivot mechanism 303, such that the upper jaw is linearly moveable with respect to the lower fixed jaw to open and close the shears. It will be readily understood than alternative actuators or pivot/hinge mechanisms may be used.

The fixed jaw 302 comprises a main body 302b and a set of hardened blades, preferably pre-hardened steel seated in recesses 302r within the lower jaw body 302b. The set of lower blades comprising two main blades 304, a razor or end blade 305 and a guide blade 306 set opposite one another, each blade being detachably mounted to the main body 302b by bolts to collectively provide efficient guiding and cutting when used against the moveable jaw. The main blades 304 and the guide blades are arranged in parallel at substantially opposing sides of the main body 302b, the razor or end blade 305 extending laterally from the main blades 304 to the guide blade 306. The fixed lower jaw blade set 304, 305 and 306 defining a cavity *c* for receiving the narrower upper jaw 301 therein. It will be readily understood that the single piece blade (or tip) of the present invention may be used with any combination of blades on the lower jaw, for example: two main blades, an end blade and two guide blades; two main blades, an end blade and one guide blade; one main blade, an end blade and two guide blade or one main blade, an end blade and one guide blade.

The upper moveable jaw 301 is fitted with first 001 and second 002 main blades and comprises a single-piece blade mounted on the front projection of the main body 301b/501b of the upper jaw. The blade *B* provides a shearing or cutting action when working against the blades of the fixed jaw. The single-piece blade *B* comprises: first and second piercing edges 413, 414 first and second shearing edges 309, 310 and first and second guide-side edges 311, 312. The piercing tips or piercing portions 413, 414 define the two outer limits of the blade *B*, through which the maximum force of puncturing is applied. The shearing edges 309, 310 engaging with the main blade 304 on the opposing fixed jaw 302, so as to make a shearing or cutting action. Each shearing edge309, 310 in use, is presented for shearing. The guide-side edges 311, 312 each functioning to align the narrower upper jaw with the guide blades 306 as it moves within the cavity *c* of the lower jaw, to aid with shearing.

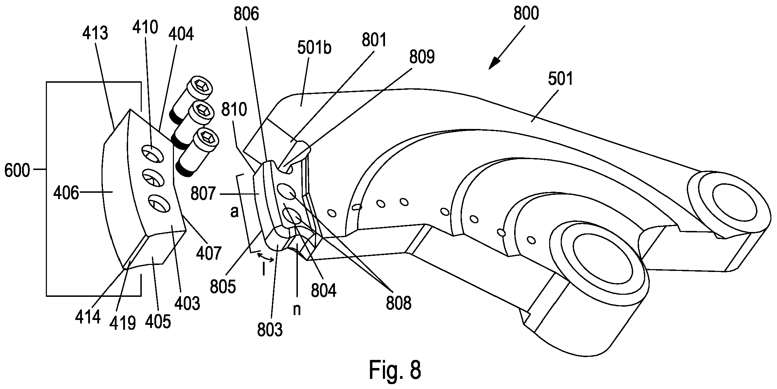

The upper blade *B* of the upper moveable jaw is attached over the tang (boot or tip) of the moveable jaw 301 and is fixed with fasteners, preferably bolts received though corresponding apertures 408 in the blade *B* and the tang. In use, the moveable jaw closes towards the fixed jaw to pierce or cut materials between the blades of the upper and lower jaws. It will be readily understood that the blade of the present invention is rotatable 180°. The blade may be orientated in a first orientation with the first piercing tip 413 facing the nose of the moving arm body and with the second piercing tip 414 being presented for use; or alternatively the blade may be orientated in a second orientation with the second piercing tip 414 abutting the nose portion (see 801 of Figure 8) of the moving arm body 301b and the first piercing tip 413 presented for use. To change the orientation between which of the first 413 and second 414 piercing tips are presented, the blade is simply rotated 180° by removing the blade from the tang, rotating its orientation 180° and re-fitting the blade to the tang. This is particularly advantageous when one of the piercing tips has been used or blunted and a further or sharper cutting edge is required.

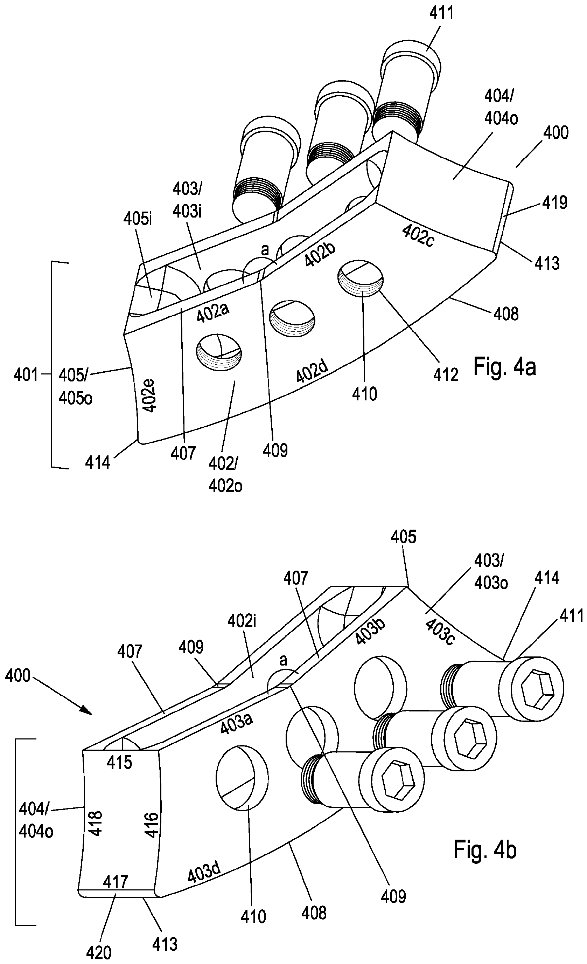

Referring to figure 4 herein there is illustrated schematically first and second perspective views 400 of a blade for a demolition shear in accordance with a first embodiment of the present invention, as per Figures 3a and 3b. The blade body 401 comprising five walls: 402, 403, 404, 405 and 406. The first 402 and second 403 walls being longitudinal running the length of the blade body, arranged in parallel directly opposite one another and spaced apart from each other; and the third 404 and fourth 405 walls, being ends, also located opposite each other, and spaced apart from each other so that the first and second longitudinal walls extend between the third and fourth walls (or first and second ends) 404, 405 to form a cavity there between. The first 402 and second 403 walls each having first and second sides. The first side comprising an inner face 402i, 403i and the second side comprising an outer face 402o, 403o; the inner face of the sides 402i, 403i facing each other across the cavity. The third 404 and fourth 405 walls, or ends each having first and second sides. The first side of each wall comprising an inner surface 404i, 405i and the second side of each wall comprising an outer surface 404o, 405o. The inner surfaces 404i, 405i facing each other at opposite ends of the cavity.

Preferably, each of the five walls are precision machined from a single block of steel. In other variations, the blade may be cast as a single piece component, 3D-printed or made from a fabricated construction welded as a single piece, and the edges and outer faces of the wall may be heat treated and/or face hardened.

The first 402 and second 403 longitudinal walls each comprise an open outer edge 407 which runs along the length of the first or second wall. The blade is symmetric about a plane extending between said first and second end walls.

Each of the first and second walls has a respective outer edge 408/402d/403d. The outer edges 408/402d/403d also forming an outer edge perimeter of the fifth wall (or front wall) 406, which extends continuously between each of the first 402 and second 403 longitudinal walls and the first and second ends 404, 405. The five walls 402, 403, 404, 405 and 406 define a cavity for receiving the tang of a moving jaw or machine tool therein. The five walls of the body fit over the tang forming a protective shell which extends around each of the four walls of the tang, and across an outwardly facing front face of the tang.

The first 402 and second 403 walls each having five edges 402a, 402b, 402c, 402d, 402e and 403a, 403b, 403c, 403d, 403e respectively, extending around a perimeter of the corresponding respective wall. Edges 402d and 403d each having an arc profile and being longer in length than the collective sum of edges 402a & 402b or 403a & 403b such that the bottom closed edges 402d, 403d of the first second walls are longer than the top outwardly facing open edge 407. An angle *a* of approximately 130-180° extends between each of edges 402a & 402b and 403a & 403b. Alternatively, it will be appreciated that edges 402d and 403d may be a straight or angled flat surfaces, or any combination thereof.

Referring to longitudinal wall 402, the lower edge 402d is longer than the collective length of edges 402a & 402b. Therefore, wall 402 is longer along edge 402d than the open edge 407. Similarly, with longitudinal wall 403, the lower edge 403d is longer than the sum of edges 403a & 403b. Therefore, wall 402 is longer along edge 402d than open edge 407. Consequently, ends 404 and 405 which span between the first and second longitudinal walls 402, 403 are curved to provide a continuous wall which extends between the longer and short edges of each of 402 and 403. Alternatively, it will be appreciated that ends 404 and 405 may be straight or angled flat surfaces, or any combination thereof

The first 402 and second 403 walls each have three apertures 410 which span between the inner 402i, 403i, and outer faces 402o, 403o of the first and second sides of the walls 402 and 403 to receive three hexagonal head threaded bolts 411 there through. In the embodiment shown, the apertures 410 on the first wall 402 each comprise a complementary inwardly facing thread 412 which matches a corresponding outwardly facing thread on the ends of the threaded bolts 411.However, it will be readily understood that alternative fasteners may be used.

The apertures on the opposite wall are of larger diameter than the inner diameter of the threads of the threaded apertures. The apertures on the opposite wall have smooth circular cylindrical faces which extend across the thickness or width of the wall.

The end walls 404, 405 each have four edges, 415, 416, 417, 418 which extend around the perimeter of the end walls. An intersection between said first end wall 404 and said front wall 406 defining a first piercing tip 413, and an intersection between said second end wall 405 and said front wall 406 defining a second piercing tip 414. Piercing tip 413 comprising an edge, a flat surface or a curved surface 419 between the first end wall and the front wall. Piercing tip 414 comprising an edge, a flat surface or a curved surface 420 between the second end and the front wall.

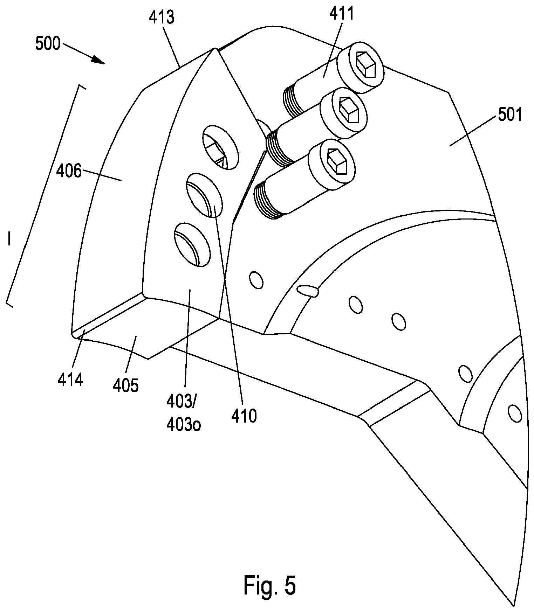

Figure 5 herein illustrates schematically a perspective exploded view 500 of a double piercing tip demolition blade and fasteners in accordance with a first embodiment of the present invention being fitted to the moving upper jaw 501/301 of a demolition shears. The same nomenclature is used as per Figures 4a and 4b. The single-piece is fitted along its longitudinal axis I over the tang of the moving jaw. When in position, the blade is secured to the tang of the jaw with the three hexagonal cap headed threaded bolts 411 which are locked by corresponding threads on the first side plate of the blade body 401 (see 412 of Figure 4a). The blade may be orientated with the first piercing tip 413 facing upwardly with the second piercing tip 414 facing downwardly, presented for use; or alternatively the blade may be orientated with the second piercing tip 414 upwardly with the first piercing tip 413 presented for use. To change the orientation between which of the first 413 and second 414 piercing tips are presented, the blade is simply rotated 180°.

In the embodiment shown, the intersection between the third wall 404 (first end) and the fifth or front wall 406 is chamfered or slightly rounded. Similarly, the intersection between the fourth wall 405 (second end) and the fifth wall 406 is also chamfered or rounded.

In the embodiment shown, the outer diameter of the circular cylindrical caps of the headed bolts fit within the diameter of the smooth circular cylindrical in the inner faces of the apertures 410. The outer diameter of a main shaft portion of the bolts is smaller than the outer diameter of the caps of the bolt heads, and the maximum outer diameter of the threaded portion is less than or equal to the outer diameter of the central shaft section of the bolts.

Referring to Figure 6 herein there is shown a rear perspective view of a single-piece, blade 600 for a demolition shear having two piercing tips in accordance with a first embodiment of the present invention. The same nomenclature is used as per Figures 4a, 4b and 5. The inner faces 402i, 403i of first 402 and second 403 walls of the blade body 401; and inner surfaces 404i, 405i of the end walls, each respectively face towards one another across a cavity and are joined by the fifth wall 406, or front wall, which extends continuously between each of the first 402 and second 403 longitudinal walls and the ends 404, 405 to define an encased recess 601 for receiving the tang of a moveable jaw or machine tool arm therein. The inner surfaces 404i, 405i of the end walls each have an inwardly facing curved protrusion 602 which, when the blade is fitted to a tang abuts the neck or narrowest region of the tang to ensure a secure fit. The protrusion also serves to strengthen and reinforce the end faces which receive the maximum impact at the point of contact between the demolition blade and the material being demolished e.g. the scrap metal. It will be readily understood that the protrusion or bulge which faces inwardly into the at least one cavity may take many forms, for example the protrusion may have a curved profile or alternatively may be an inwardly facing flat, or angled surface, or any combination thereof. The protrusion may also be a polyhedron i.e. any three-dimensional shape having flat polygonal faces, straight edges, sharp corners or vertices. Preferably, the protrusion starts and ends in the same plane of said first or second end. It is envisaged that the protrusion or bulge is convex relative to the end wall from which it extends. The protrusion is convex with respect to said end wall from which is protrudes.

The ends 404 and 405 each having four edges 415, 416, 417, 418 which correspond to an upper edge 603, 604 a shear edge 605, 606, a guide edge 607, 608 and a lower edge 417 respectively. The first and second ends of the lower edge 417 in combination with the fifth side 406 forming piercing tip 413 and 414 respectively. The first end 404 providing a first upper edge 603, a first shear edge 309/605, a first guide edge 607/311, and lower edge 417 and a first piercing tip 413. The second end 405 providing a second upper edge 604 a second shear edge 606/310, a second guide edge 608/312 and a second piercing tip 414.

The intersection between said first end wall 404 and said front wall 406 defining a first piercing tip 413, and the intersection between said second end wall 405 and said front wall 406 defining a second piercing tip 414. Piercing tips 413, 414 comprising curved surface 419, 420, between the first wall and the front wall. It will be readily understood that the curved surface 419, 420 may be a flat surface between the first wall and the front wall. Alternatively, the outermost edges 417 at the boundary between the front wall 406 and each of the end walls 404, 405, define a first 413 and a second 414 piercing tip respectively.

Threaded apertures 412 are provide on one side of the blade, extending through the entire width of the outer to inner surface of the first longitudinal wall 402, so that when each threaded bolt passes through an aperture 410 on the second longitudinal wall 403, through a channel in a tang, the threads of the bolt engage with a threaded bore of the aperture to secure the blade in place. Whilst different fixings will be disclosed herein, the main body 401 of the blade as illustrated in Figure 6 is common to embodiments 1 to 4 disclosed herein.

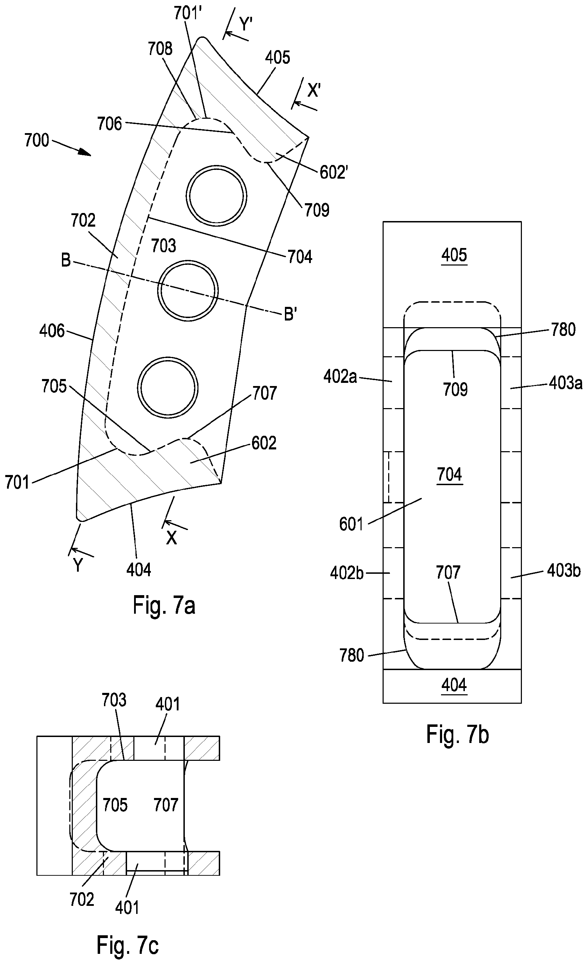

Referring to figure Figure 7a herein there is shown a cross-sectional view 700 of a blade for a demolition shear, along axis A of Figure 6 in accordance with a first embodiment of the present invention. Each inwardly facing protrusion 602, 602' of the first 404 and second 405 ends are visible. It is also shown that the first and second protrusions 602', 602' of ends 404 and 405 merge continuously via curves 701, 701' into a first side 702 of the front wall 406; demonstrating the single-piece precision machined nature of the demolition blade of the present invention.

The first end wall 404 is thicker than the thickness of the front wall (fifth wall 406). The first end wall 404 comprises a protruding portion 602, which faces inwardly to the central cavity formed between the first and second longitudinal walls, the third and fourth ends 404, 405 and the front wall 406 such that the open end of the cavity forms a mouth which is more constricted than the relatively wider internal dimension of the cavity between the third and fourth sides. The distance between opposed protrusions 602, 602' is smaller than the distance between the internal surfaces of lobes 701, 701'. The length of an internal perimeter around a cross-section X - X', looking in the direction of the arrow, on the inside of the cavity on a first side of the apertures in the side walls which draw around the first and second longitudinal side walls, and the third and fourth end walls and which is nearer to the open end of the cavity and between the open mouth of the cavity and the set of circular apertures in the longitudinal side walls, is shorter than the length of a second internal perimeter Y-Y', looking in the direction of the arrow, drawn around the inside of the cavity on the first and second longitudinal walls and the third and fourth end walls deeper into the cavity, and beyond the apertures in the longitudinal sides of the body, so that the protrusions 602, 602' form a restricted area entrance to the cavity, compared to the area of the cavity as viewed in the same direction, deeper within the cavity and nearer to the front wall 406.

As shown in cross-sectional view in Figure 7a herein, the central cavity region formed by the first to fifth walls 402 - 406 comprises first 702 and second longitudinal faces 703, formed by the inwardly facing sides of the exposed first and second longitudinal walls; a concave inwardly facing curved front surface 704 on the inside of the front wall (fifth wall 406); and first a substantially "S" shaped end face 705 facing inwardly from the third wall 404; and a second substantially" S" shaped surface 706 at the opposite end of the cavity to the first end face 705; the first and second S - shaped surfaces forming the first and second protruding portion 602, 602' respectively. At an intersection of a first end of the inwardly facing curved front surface 704 and the first S-shaped end face 705 there is a concave surface, and nearer the open mouth 709, the first S-shaped portion forms a convex surface 707 at the position of the first protruding portion 602. The protrusion 602 comprises convex portion 707 and thus may be considered a convex protrusion. At an intersection of the second end of the inwardly facing curved front surface 704 and the second S-shaped end face 706 there is a concave surface 708 inside the cavity, and nearer to the open mouth, the second S-shaped portion forms a convex surface 709 at the position of the second protruding portion 602'. The protrusion 602' comprises convex portion 709 and thus may be considered a convex protrusion.

Figure 7b herein illustrates schematically a view of a single-piece, blade for a demolition shear, along axis X-X of Figure 7a in accordance with a first embodiment of the present invention. The convex portions 709 and 707 protrude inwardly towards the centre of the cavity compared to the outer perimeter 780 forming the open mouth on the underside of the blade, into which the tang of the demolition shear is inserted. The length of the open mouth in the longitudinal direction along the blade is longer than the distance between the two protruding convex portions 707, 709. When inserting the tang into the cavity, the tang must be passed through the open mouth perimeter 780, and past the projecting convex protruding portions 707, 709 so that a forward lip of the tang can locate in the relatively larger portion of the cavity beyond the convex lips 707,709. As viewed in cut away side view in Figure 7a, the internal cavity comprises a relatively narrower entrance portion extending between the first and second convex portions 707, 709 which leads into a more cavernous bulged section extending between the internal lobes 701, 701' inside the blade outer shell comprising first and second longitudinal side walls, first and second end walls, and the front wall. When the blade is viewed so that the front face is horizontal, the internal cavity may be described as 'waisted' or having an hour glass profile being wide at the open mouth portion, narrower where the protrusion 602,602' extend inwardly into the cavity, and widening again at the point of lobes 701, 701'. The convex portions 707 and 709 of protrusions 602' and 602 respectively defining a 'waisted' region.

Figure 7c herein illustrates schematically a cross-sectional view of a one-piece, blade for a demolition shear, along axis B-B of Figure 7a in accordance with a first embodiment of the present invention. The figure shows the "S" shaped end face 705, the convex surface 707, and central apertures 401, and cut away through the first and second longitudinal side walls and the front wall. The convex protruding portions 602, 602' bulge inwardly towards the centre of the cavity, in a direction towards the centre of the cavity. The shape of the internal lobes 701, 701' bulge outwardly away from the centre of the cavity, so that a minimum distance between the surfaces of the opposing convex protruding portions 602, 602' is less than a maximum distance between the surfaces of the internal lobe sections 701, 701' in a direction which extends between the third and fourth walls 404, 405 respectively.

Whilst different fixings will be disclosed herein, the main body 401 of the blade as illustrated in Figures 7a and 7b will be common to embodiments 1 to 4 disclosed herein.

Figures 8 herein illustrate schematically an exploded view 800 of a blade for a demolition shear having a first and second piercing tips, in accordance with a first embodiment of the present invention being fitted to the tang of a moving upper jaw 501 of a demolition shears. The same nomenclature is used as per Figures 4a, 4b and Figure 5. The single-piece blade is fitted along its longitudinal axis over the tang 802 of the moving jaw 501. It is possible to fit a single piece demolition blade having a narrower outer open edge 407 than the widest dimensions of the blade tip 413 to tip 413 over the tang of the jaw due to custom modification of the tang. The tang being narrower in height and width than the main body 301b/501b of the upper jaw from which is projects. An inclined nose 801 is present providing a visual demarcation at the transition between the wider dimensions of the main body 501b of the upper jaw and the narrower tang 802; clearance is provided for the upper wall 404 of the blade 600. The tang comprises a lower surface 803, two opposing side surfaces 804, 805 (805 not visible) an upper surface 806 and a bridging front surface 807. The lower surface, two opposing side surfaces and bridging front surface all taking substantially the same form as a conventional two-lobed tang (as shown in Figure 2b). The upper surface of the tang 806 being modified by chamfering such that the tang comprises a single lobe / at its lower surface 803 only. The removal of the upper lobe structure as found in a conventional tang also dissect the upper-most aperture 807 of the tang, so that the tang has two full, circular apertures 808 and a partial, semi-circular opening 809 for receiving fixings 411 there through. The upper surface 806 having a flat upper face 810 and the longitudinal axis a of the tang being shorter than the height of the opening formed by the outer walls 407 of the blade 600.

When in position, the blade is secured to the tang of the jaw with the three hexagonal threaded bolts 411 which are locked by corresponding threads on the first side plate of the blade body. The narrower dimensions of the blade as defined by walls 407 surrounding the tapered neck portion n of the tang when the blade is *in situ.* The blade may be orientated with the first piercing tip 413 upwardly with the second piercing tip 414 presented for use; or alternatively the blade may be orientated with the second piercing edge 414 upwardly with the first piercing tip 413 presented for use. To change the orientation between which of the first 413 and second 414 piercing tips are presented, the blade is rotated 180°.

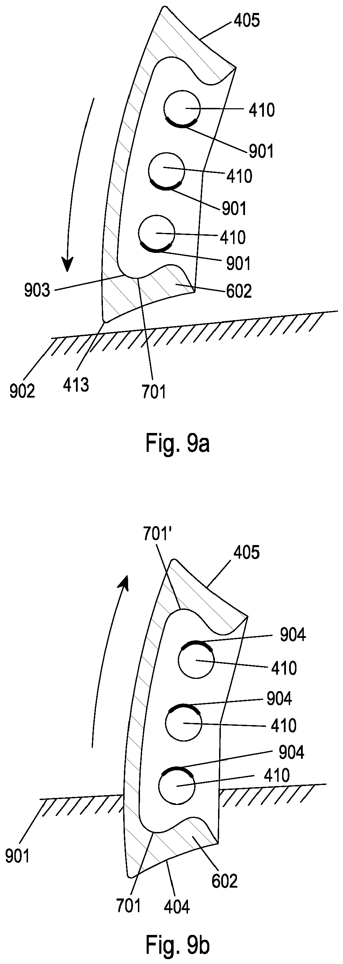

Figure 9a herein illustrates a cross-sectional view 900 along axis A of Figure 6 highlighting the main pressure points 901 within the blade upon entry of the demolition blade into a demolition surface 902. In use, upon downward movement of the moveable jaw of the demolition shear, the demolition blade is met with resistance by the demolition surface 902. The resistance transfers pressure of increased impact forces to the lower most surface 901 of apertures 410. Increased pressure 903 is also experienced at curve 701 of the inner surface of end wall 404. When the blade makes contact with the demolition surface 902, resistance is experienced by curve 701 at point 903 when the lower lobe portion *l* of the tang (see 803 of Figure 8) is pushed into the curve 701.

In contrast, Figure 9b herein illustrates a cross-sectional view along axis A of Figure 6 highlighting the pressure points upon withdrawal of the demolition blade into a demolition surface. In use, upon upward movement of the moveable jaw of the demolition shear, the resistance illustrated in Figure 9a is removed and instead, the upper most surface 904 of apertures 410 experience increased pressure. The pressure or resistance previously experienced 903 at curve 701 of the inner surface of end wall 404 is relieved. The upper curve 701' does not experience pressure from the tang of the blade when the demolition sear is raised because the upper portion of the tang (see 810 of Figure 8) has been chamfered and the lobe portion which is common to a prior art tangs (see / of Figure 2b) is not present and consequently, pressure is not transferred into curve 701. The pressure points illustrated in Figures 9a and 9b are common to all embodiments disclosed herein.

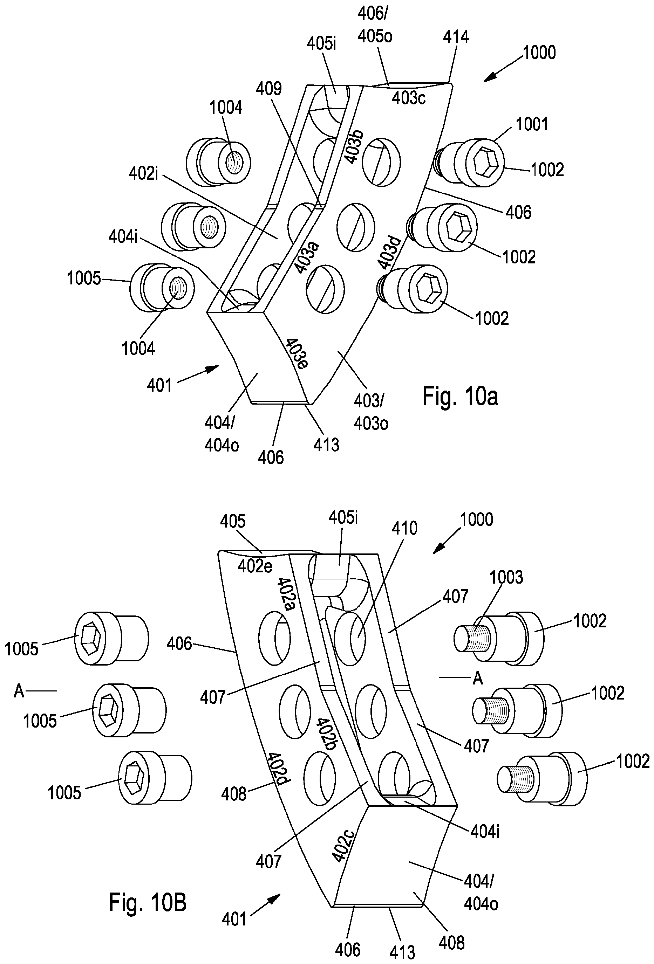

Figures 10a and 10b herein illustrate schematically a perspective view 1000 of a single body blade for a demolition shear and fasteners in accordance with a second embodiment of the present invention. The blade is substantially as described in Figures 4, 6, 7a, 7b and 7c, the second embodiment differing from the first embodiment only by the type of fasteners used. The same nomenclature is used throughout. Referring to Figure 10a and 10b herein the blade body 401 is analogous to the first embodiment, and comprises five walls 402, 403, 404, 404 and 406 made from cast metal or fabricated from metal plate, 3D printed, or preferably, precision machined from a solid block of steel. The first 402 and second 403 longitudinal walls being spaced apart from each other and arranged in parallel directly opposite one another and; the third 404 and fourth 405 end walls, being curved ends, spaced apart from each other and located opposite each other. The first and second longitudinal walls extending between the third and fourth walls or ends 404, 405 and are each connected to the front wall 406, which extends continuously between each of the first 402 and second 403 longitudinal walls and the ends 404, 405 to form a cavity there between. The front wall 406 having an arced or curved profile. The first and second walls each having first and second sides. The first sides of each of the first 402 and second 403 walls comprising inner faces 402i, 403i which face each other at opposite ends of the cavity. The cavity or recess created by the five walls 402, 403, 404, 405 and 406 being suitable for receiving the tang of a moving jaw or machine tool therein. The outermost edges, at the boundary between the front wall 406 and each of the ends 403, 404 defining a first 413 and a second 414 piercing tips respectively.

Each of the first 402 and second 403 walls having open 407 and closed outer edges 408. The closed outer edges 408 being formed by the direct attachment of the fifth wall 406, or front wall, which extends continuously between each of the first 402 and second 403 longitudinal walls and the ends 404, 405. The open outer edge 407 running the length of the first or second side plate and in combination with the internal surfaces 404i and 405i of the end walls define an opening for receiving the tang of a machine tool therein.

The first 402 and second 403 side walls each having five edges 402a, 402b, 402c, 402d, 402e and 403a, 403b, 403c, 403d, 403e respectively. Edges 402 c, 402d, 402e and 403c, 403d and 403e each having a smooth continuous curve or arced profile. The blade is a three-dimensional structure having a cavity or recess therein. Sides 402 and 403 are substantially identical in shape differing only by the dimensions of the apertures 410 required to meet complementary portions of fixings. Longitudinal sides 402 and 403 are spaced apart by ends 404 and 405 which are mirror images of one another about axis A-A of Figure 10b.

The edges 402d and 403d each being longer tip 413 to tip 414 than the collective length of edges 402a & 402b or 403a & 403b tip to tip, such that the bottom closed edges 402d and 403d of the first 402 and second 403 walls are wider than the top open edge 407/402a,402b/403a,403b. The first 402 and second 403 walls each having three apertures 410 for receiving three complementary male and female fitted bolts 1001 there through. Each hexagonal headed male bolt 1002 having a threaded projection 1003 complementary to the threaded portion 1004 of the hexagonal headed female bolts 1005. The male and female headed bolts 1001 being received through apertures 410 of the first or second walls, through the two full, circular apertures and partial, semi-circular opening of the chamfered tang (see 808 & 809 in Figure 8), through aperture 410 of the remaining first or second wall and into the female bolts 1005 to secure the blade 401 to the tang of a machine tool. It will be readily understood that alternative fasteners maybe used.

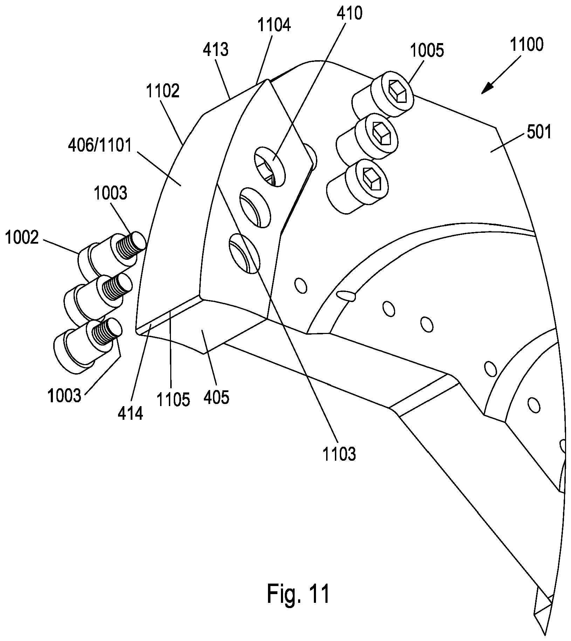

Referring to Figure 11, a perspective partially exploded view 1100 of a single-piece, blade for a demolition shear having to piercing tips, in accordance with a second embodiment of the present invention being fitted to the moving upper jaw 301/501 of a demolition shear is shown. The same nomenclature is used for the blade body as per Figures 4a and 4b. As per the first embodiment, the blade body comprises five walls or sides, namely first 402 and second 403 longitudinal walls, ends 404, 405 and a front wall 406 extending continuously between each of the first and second sides and third and fourth sides (ends). The front wall 406 of the blade body 401 comprises a first side having a convex outwardly facing surface 1101 extending between the first 413 and a second 414 piercing ends of the tip; the outwardly facing surface 1101 bounded by a first curved edge extending between the first 413 and second 414 piercing end; a second curved edge 1103 extending between the first and second ends and spaced apart from the first curved edge 1102; a first end edge 1104 extending between the first and second curved edges at their respective first ends; and a second end edge 1105 extending between the first and second curved edges at their second ends.

The front wall has a thickness in the range 10 to 50mm and preferably in the range 15 to 40mm as measured between the first and second sides of the wall, which closes off part of the cavity, for receiving the tang of a moving jaw or machine. The first 1104 and second end edges 1105 are bevelled/chamfered at an angle of 30° to 60°, preferably 45°.

Alternatively, the first end edge 1104 may be straight or curved. Similarly, the second end edge 1105 may also be straight or curved.

When in position, the blade is secured to the tang of the jaw by the male and female headed bolts 1001 which extend though the apertures in the blade and the tang of the tool to secure the blade to the tool. The blade may be orientated with the first piercing tip 413 facing upwardly with the second piercing tip 414 facing downwardly, presented for use; or alternatively the blade may be orientated with the second piercing tip 414 upwardly facing, with the first piercing tip 413 presented for use. To alternate the orientation of the blade and to determine which of the first 413 and second 414 piercing tips are presented, the blade is rotated 180° between a first and second operative position.

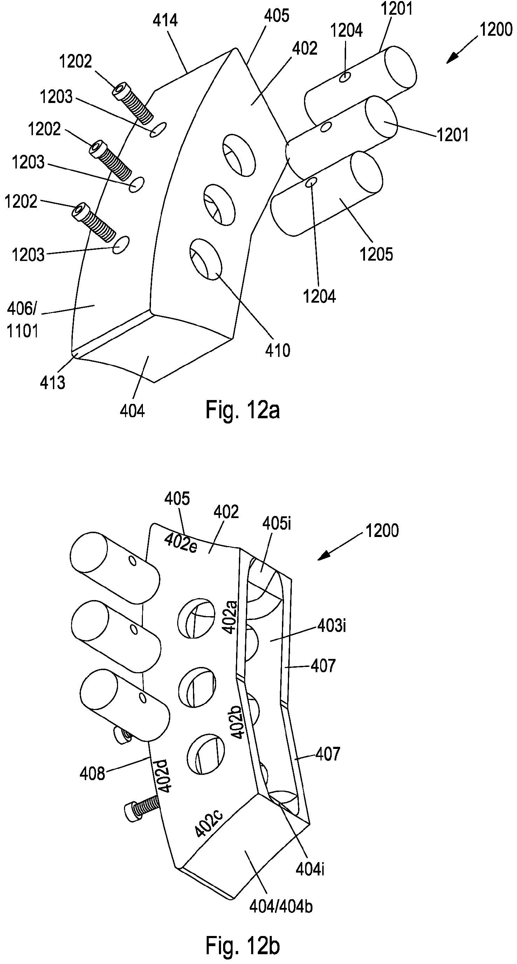

Figures 12a and 12b herein illustrate schematically a perspective view 1200 of a single-piece blade for a demolition shear and fasteners in accordance with a third embodiment of the present invention. The blade is substantially as described in Figures 4, 6, 7a, 7b, 7c, 10a and 10b the third embodiment differing from the first and second embodiments by the type of fasteners used. The same nomenclature is used throughout.

Referring to Figures 12a and 12b herein the five-walled blade body comprises first 402 and second 403 longitudinal walls spaced apart from each other and arranged directly opposite one another and end or substantially transverse walls 404 and 405, also spaced apart from each other and located opposite each other. The first 402 and second 403 walls extending between the ends 404, 405 and are each connected to a fifth wall or front wall 406. The front wall 406, having a convex outwardly facing surface 1101, which extends continuously between each of the first 402 and second 403 walls and the ends 404, 405 to form a cavity for receiving the tang of a moving jaw or machine tool therein. The inner faces 402i, 403i of the first 402 and second 403 walls facing each other and being located at an opposing end of the cavity to the inner surfaces 404i, 405i of the end walls 404, 405. The blade body 401 having first 413 and a second 414 piercing tips respectively. It will be readily appreciated that at least one side of the front wall 406 may comprise a series of flat, straight or angled surfaces or any combination thereof.

The first 402 and second 403 sides each having three apertures 410 for receiving three complementary barrel nuts 1201 with fixing bolts 1202 there through. Each barrel nut 1201 having a complementary, preferably hexagonal headed, fixing bolt 1202. The threaded fixing bolts 1202 being received through apertures 1203 in the convex outwardly facing surface 1101 of the front face 406, to mate with corresponding threads in apertures 1204 on the longitudinal body 1205 of a complementary barrel nut 1201. Although three complementary barrel nuts and fixing bolts are disclosed in the third embodiment it will be obvious to a person skilled in the art that the number of barrel nuts and fixing bolts may be altered. It will also be readily understood that alternative fasteners maybe used.

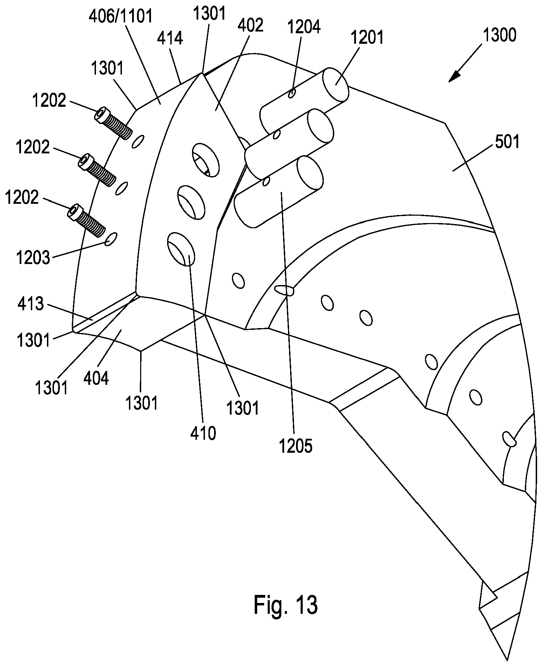

Referring to Figure 13, a perspective partially exploded view 1300 of a one-piece, blade for a demolition shear and fasteners in accordance with a third embodiment of the present invention being fitted to the moving upper jaw 501 of a demolition shears is shown. The same nomenclature is used for the blade body as per Figures 4a and 4b and 11. As per the first and second embodiments, the blade body comprises five walls, and is formed when the first 402 and second 403 longitudinal walls are connected by end walls 404, 405 and front wall 406. The outwardly curved front wall 406 extending continuously between each of the first and second longitudinal walls and ends. The blade body comprising 8 vertices 1301 (two not in view in figure 13).

When in position, the blade is secured to the tang of the jaw by complementary barrel nuts 1201 and fixing bolts 1202. Each barrel nut 1201 having a complementary, preferably hexagonal headed, fixing bolt 1202. The threaded fixing bolts 1202 being received through apertures 1203 in the convex outwardly facing surface 1101 of the front face 406, to mate with corresponding threads in apertures 1204 on the longitudinal body 1205 of a complementary barrel nut 1201 to secure the blade to the tool.

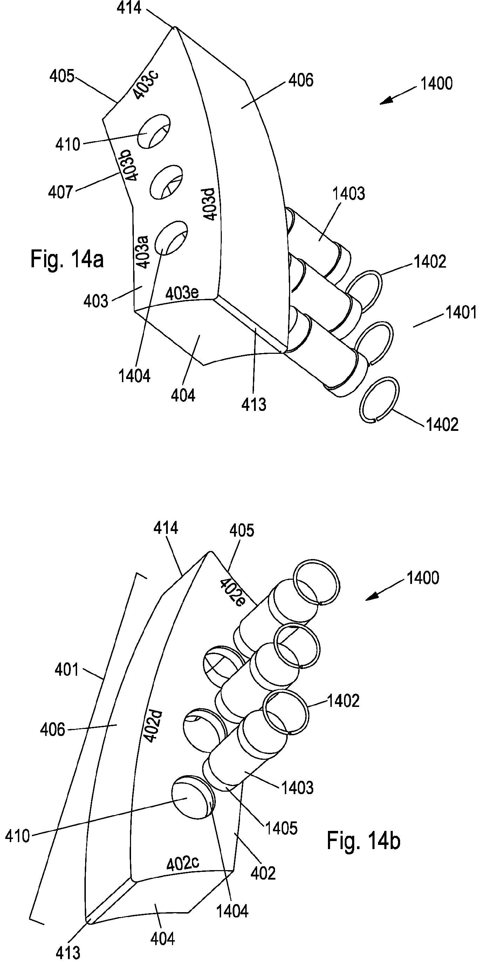

Figures 14a and 14b herein illustrate schematically a perspective view 1400 of a single form, blade for a demolition shear having two piercing tips and corresponding fasteners in accordance with a fourth embodiment of the present invention. The single-piece demolition shear blade is as described in Figures 4a through to Figure 13 and the same nomenclature is used. The fourth embodiment differs only from the first, second and third embodiments by the fasteners used. The blade body 401 comprises five walls 402, 403, 404, 404 and 406 being a first and second longitudinal wall, and first and second ends and a front wall respectively. The first 402 and second 403 longitudinal walls being spaced apart, in parallel opposite one another. The first 402 and second 403 walls may also be referred to as lengthwise walls. The first 404 and second 405 end walls being juxtaposed to one another and being substantially transverse to each of the first and second longitudinal sides. The first and second walls extending between the end walls, and all four walls are connected to the fifth wall or curved front wall 406, which extends continuously between each of the first 402 and second 403 walls and the ends 404, 405 to form a cavity there between. The cavity or recess created by the five walls 402, 403, 404, 405 and 406 being suitable for receiving the tang of a moving jaw or machine tool therein. First 413 and a second 414 piercing tips are provided at the outermost edges of the front face 406, where the front face 406 and end plate 404, 405 meet.

The first 402 and second 403 longitudinal walls each having five edges 402a, 402b, 402c, 402d, 402e and 403a, 403b, 403c, 403d, 403e respectively. Edges 402c, 402d, 402e and 403c, 403d and 403e each having a smooth continuous curve or arced profile. Each of the first 402 and second 403 walls have an open outer edges 407, which runs the length of the first or second wall (i.e. 402a+402b and 403a+403b). The outer edges 407 in combination with the inclined internal sides 404i and 405i of end walls 404, 405 define an opening to the cavity for receiving the tang of a moving jaw therein.

Edges 402d and 403d are longer tip 413 to tip 414 than the collective length of edges 402a & 402b or 403a & 403b tip to tip, resultantly, the lower closed edges of the first 402d and second 403d walls are wider than the sum of the top open edges 407.

Referring to the fourth and preferred embodiment, the first 402 and second 403 longitudinal walls each have three apertures 410, each aperture for receiving a dowel with a complementary fixing 1401 there through. To secure the blade to the tang of the tool, the fixing 1401, in the form of a spring clip 1402 is constricted around a corresponding dowel 1403 and the combined dowel and spring clip are inserted into the aperture 410. Once located within the aperture, the spring clip expands to push against the inner wall 1404 of aperture 410 creating an interference fit and increasing frictional forces retaining the dowel within the aperture, to secure the blade 401 to the tang of a machine tool. The dowel 1403 is machined and co-operable with a complementary recess 1405 in the blade aperture which receives the spring clip therein. The advantage of the dowel and spring clip attachments is that the dowel can be hardened to adsorb pressure which results from opening and closing of the jaw of the shear. Advantageously, the dowel and spring clip assembly requires less specific tools to fix the blade to the tang e.g. no requirements for a specific size of head socket, and it less likely to experience resistance to removal e.g. a damaged thread mechanism. It will be readily understood that alternative fasteners or a different number of dowels and spring clips maybe used. For example, fitted bolts, male and female headed bolts etc.

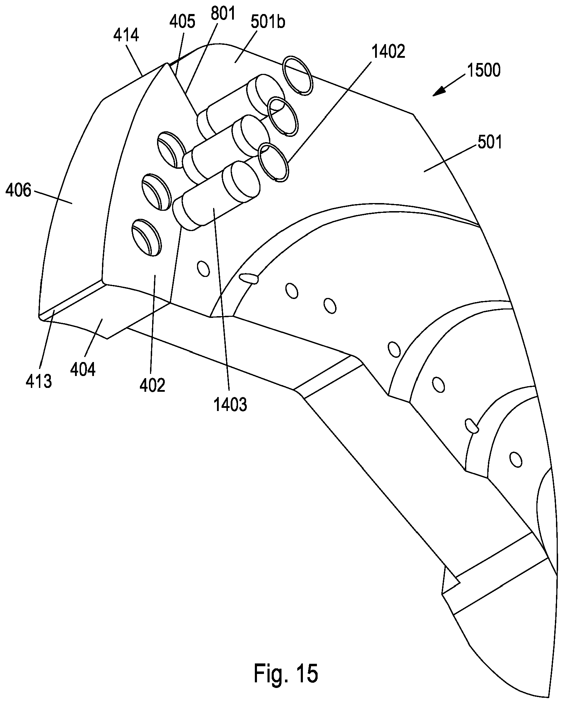

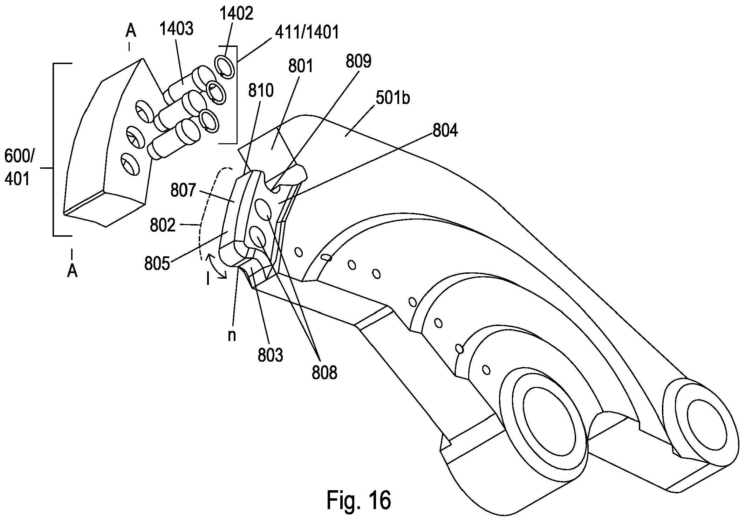

Figure 15 herein illustrates schematically a perspective partially exploded view 1500 of a blade for a demolition shear and fasteners in accordance with a fourth embodiment of the present invention, being fitted to the moving upper jaw of a demolition shear. The same nomenclature is used for the blade body as per Figures 4a and 4b and 11. As per the first, second and third embodiments, the blade body comprises five sides, and is formed when the opposing first 402 and second 403 longitudinal walls and opposing ends 404, 405 are connected by the continuous extension of the outwardly curved front wall 406. When in position, the blade is secured to the tang of the jaw by dowels 1403 and spring clips 1402 which extend though apertures in the blade body 410 and also though aligned corresponding apertures in the tang of the moving jaw or machine tool (see Figure 16) to secure the blade to the tool. When *in situ,* one of the piercing tips 414 is shielded and does not perform a piercing function. A clearance, of preferably 3mm is required to ensure that pressure is not transferred to the nose 801 portion and also to accommodate worn or used tip - weld metal. The blade may be orientated with the first piercing tip 413 faces upwardly with the second piercing tip 414 is orientated downwardly and presented for use; or alternatively the blade may be orientated with the second piercing tip 414 upwardly with the first piercing tip 413 presented for use. To change the orientation between which of the first 413 and second 414 piercing tips are presented, the blade is removed from the tang, rotated 180° and reattached over the tang.

Referring to Figure 16 herein illustrates schematically an exploded view of a single-piece, blade for a demolition shear having two piercing tips, in accordance with a fourth embodiment of the present invention being fitted to the tang of a moveable jaw. The same nomenclature is used as per previous figures to denote the common components of the blade body 401/600. The longitudinal axis A-A of the one-part blade 600 is aligned with the longitudinal axis of the tang 802 of the moving jaw 501, and the blade is fitted over the tang.

The blade comprises an opening defined by open outer walls (see 407 Figure 14a) which is relatively narrower than the outer tip 413 to tip 414 dimensions of the convex face 406 of the blade, such that the cavity within the blade expands and becomes larger in width towards the front face 406. The narrower opening is able to fit over the tang of the moving jaw because of modification of the tang. The tang being narrower in height and width than the main body 501b of the upper jaw from which is projects. The main body comprising an inclined nose 801 is present providing a visual demarcation at the transition between the wider dimensions of the main body 501b of the upper jaw and the narrower tang 802 and providing an abutment for the upper wall 404 of the blade 600. The tang comprises a lower surface 803, two opposing side surfaces 804, 805 (805 not visible) an upper surface 806 and a bridging front surface 807. The lower surface, two opposing side surfaces and bridging front surface all taking substantially the same form as a conventional two-lobed tang (as shown in Figure 2b). The upper surface of the tang 806 being specifically manufactured such that the tang comprises a single lobe / at its lower surface 803 only. The single lobe tang comprises an upper-most aperture 807, two full, circular apertures 808 and a partial, semi-circular opening 809 for receiving fixings 411 there through. The upper surface 806 having a flat upper face 810 and the longitudinal axis a of the tang being shorter than the height of the opening formed by the outer walls 407 of the blade 600.

It will be readily understood that existing tangs can be modified in this way for compatibility with the single-piece, double edged piercing blade of the present invention, such that the present invention may be retro-fitted to existing machinery. The blade of the present invention does not need to be provided with a modified tang.

When in position, the blade is secured to the tang of the jaw by dowels 1403 and spring clips 1402 which extend though apertures in the blade body 410 and also though aligned corresponding apertures in the tang of the moving jaw or machine tool to secure the blade to the tool. The narrower dimensions of the blade as defined by edges 407 surrounding the tapered neck portion *n* of the tang when the blade is *in situ.*

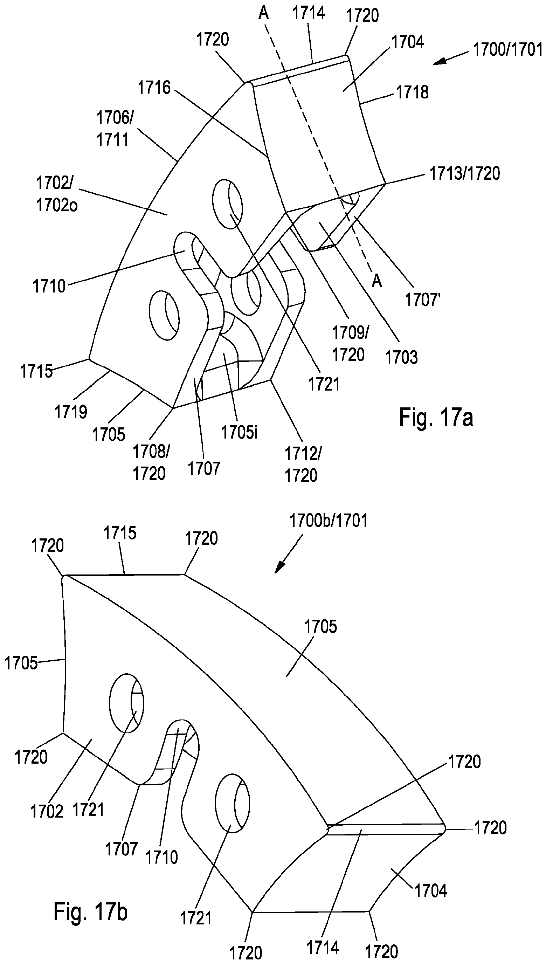

Referring to Figure 17a there is shown a rear view 1700 of single-piece, blade for a demolition shear in accordance with a fifth embodiment of the present invention. The blade body 1701 comprising five walls 1702, 1703, 1704, 1705 and 1706. The first 1702 and second 1703 longitudinal walls being, arranged in parallel directly opposite one another and spaced apart from each other; and the third 1704 and fourth 1705 walls, being ends, or substantially transverse walls, also located opposite each other, and spaced apart from each other so that the first and second walls extend between the third and fourth end walls to form a cavity there between. The blade is symmetrical about a plane extending longitudinally between said first and second end walls and bisecting the front wall. The first 1702 and second 1703 walls each having first and second sides. The first sides comprising an inner face 1702i, 1703i and the second sides comprising an outer face 1702o, 1703o; the inner face 1702i, 1703i of walls 1702, 1703 facing each other across the cavity. The third 1704 and fourth 1705 transverse walls, or ends having an inner surfaces 1704i, 1705i which also face each other at opposite ends of the cavity. Each of the five walls being constructed from welded plate metal, precision machined from a solid block of steel, cast molded of 3D printed as a single piece.

The first 1702 wall comprising an open outer edge 1707 which extends from a first 1708 to a second 1709 end of the narrowest diameter of said first side 1702. Edge 1707 comprising an indent 1710 which faces towards the convex outwardly facing surface 1711 of the fifth side (or front wall) 1706. The second wall 1703 comprising an open outer edge 1707' which extends from a first 1712 to a second 1713 end of the narrowest diameter of said second side.

Edges 1707, 1707' each comprising a curved indent or notch 1710 for receiving a male mating portion of the tang. Preferably the notch, or arched opening 1710 is concave with respect to open edges 1707, 1707'.

Each of the first 1702 and second 1703 walls having an outer edge closed by direct attachment of the fifth or front wall 1706, which extends continuously between each of the first 1702 and second 1703 longitudinal walls and the end walls, interchangeably called substantially transverse walls 1704,1705. The five walls 1702, 1703, 1704, 1705 and 1706 defining a cavity for receiving the tang of a moving jaw or machine tool therein.

First 1714 and second 1715 piercing tips are spaced apart and formed by the edges of the front wall 1706 and the first end 1704; and the front wall 1706 and the second end 1705 respectively. The piercing tips 1714, 1715 defining the two outer limits of the blade *B*, though which the maximum force of puncturing is applied.

First 1716 and second 1717 shearing edges and first 1718 and second 1719 guide edges are also provided. Apertures 1721 in the first 1702 and second 1703 side walls, receive fixing therethrough for attaching the blade to the tang of a moving jaw or a machine tool. The aperture(s) 1721 may be threaded for complementary to a threaded fastener. The blade body 1701 being compatible with a tang 802 as described in Figure 8.

Referring to Figure 17b there is shown a front perspective view 1700b of the fifth embodiment shown in Figure 17a comprising a blade body 1701 with five walls 1702, 1703, 1704, 1705 and 1706 and having 8 vertices 1720 between said. The front wall 1706 extending continuously between the first and second end walls 1704, 1705.

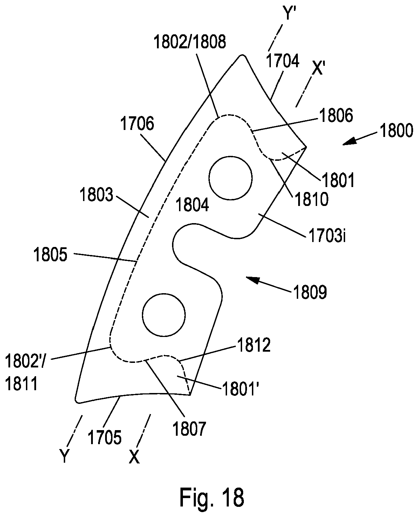

Referring to figure Figure 18 herein there is shown a cross-sectional view 1800 of a one-piece, blade for a demolition shear, along axis A-A of Figure 17 in accordance with a fifth embodiment of the present invention. From the cross section, only the second wall 1703 of the blade body is visible, as are third 1704 and fourth 1705 end walls, or substantially transverse walls spaced apart from one another and the curved fifth wall 1706. The walls forming a cavity there between. Each inwardly facing protrusion 1801, 1801' of the first 1704 and second 1705 end walls are visible. It is also shown that the first and second protrusions 1801, 1801' of end walls 1704 and 1705 merge continuously via curves, or lobes 1802, 1802' into a first side 1803 of the front wall 1706; demonstrating the single-piece machined nature of the demolition blade of the present invention.

The first end wall 1704 (third side) is thicker than the thickness of the front wall 1706. The first end wall 1704 comprises a protruding portion 1801, which faces inwardly to the central cavity formed between the first and second longitudinal sides, the third and fourth walls 1704, 1705 and the fifth wall 1706 such that the open end of the cavity forms a mouth which is more constricted than the relatively wider internal dimension of the cavity between the third and fourth sides.

The second end wall 1705 is thicker than the thickness of the front wall 1706. The second end wall 1705 comprises a protruding portion 1801', which faces inwardly to the central cavity formed between the first and second longitudinal sides, the third and fourth walls 1704, 1705 and the front wall 1706 such that the open end of the cavity forms a mouth which is more constricted than the relatively wider internal dimension of the cavity between the third and fourth walls (or first and second end walls) 1704, 1705.

The distance between opposed protrusions 1801, 1801' smaller than the distance between the internal surfaces of lobes 1802, 1802'. The length of an internal perimeter around a cross-section X - X' on the inside of the cavity on a first side of the apertures in the side walls which draw around the first and second longitudinal side walls, and the third and fourth end walls and which is nearer to the open end of the cavity and between the open mouth of the cavity and the set of circular apertures in the longitudinal side walls, is shorter than the length of a second internal perimeter Y-Y' drawn around the inside of the cavity on the first and second longitudinal side walls and the third and fourth end walls deeper into the cavity, and beyond the apertures in the longitudinal walls of the body, so that the protrusions 1801, 1801' form a restricted area entrance to the cavity, compared to the area of the cavity as viewed in the same direction, deeper within the cavity and nearer to the front wall 406.

As shown in cross-sectional view in Figure 7a herein, the central cavity region formed by the first to fifth walls 1702 - 1706 comprises first and second longitudinal faces 1804, formed by the inwardly facing portions 1703i of the exposed first and second longitudinal walls; the curved inwardly facing surface 1805 of the front wall 1706; and first a substantially "S" shaped end face 1806 facing inwardly from the third wall 1704; a second substantially" S" shaped surface 1807 at the opposite end of the cavity to the first end face 1705; the first and second S - shaped surfaces forming the first and second protruding portions 1801, 1801' respectively. At an intersection of a first end of the inwardly facing curved front surface 1808 and the first S-shaped end face 1704 there is a concave surface 1808, and nearer the open mouth 1809, the first S-shaped portion 1806 forms a convex surface 1810 at the position of the first protruding portion 1801. At an intersection of the second end 1705 of the inwardly facing curved front surface 1804 and the second S-shaped end face 1807 there is a concave surface 1811 inside the cavity, and nearer to the open mouth 1809, the second S-shaped portion 1807 forms a convex surface 1812 at the position of the second protruding portion 1801'.

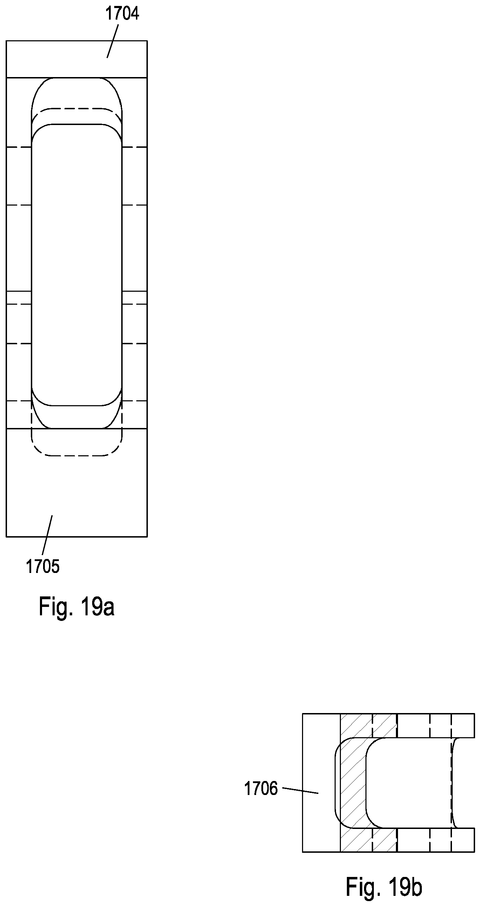

Figure 19a herein illustrates schematically a view of a blade for a demolition shear, along axis A-A of Figure 17 in accordance with a fifth embodiment of the present invention.

Figure 19b herein illustrates schematically a cross-sectional view of a blade for a demolition shear, along axis B-B of Figure 17 in accordance with a fifth embodiment of the present invention.

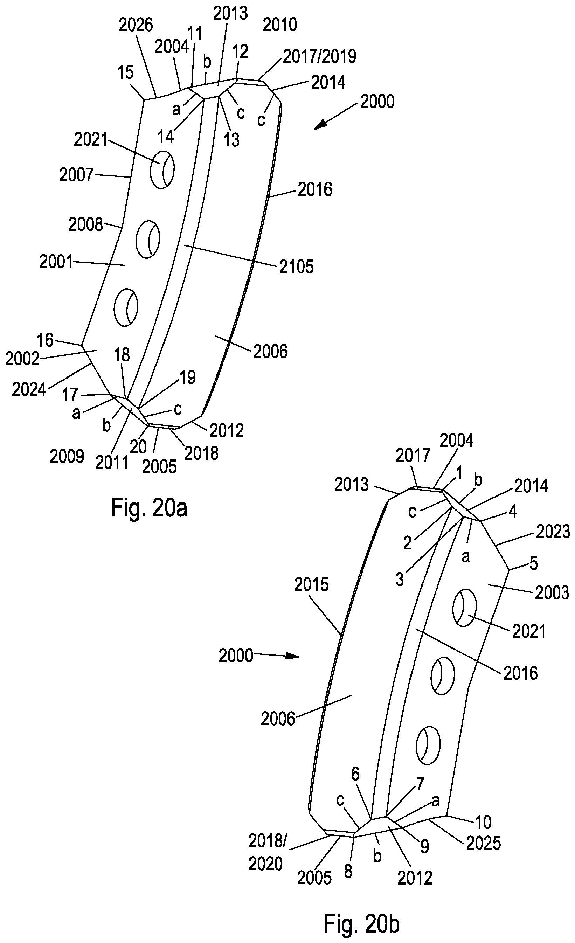

Referring to Figures 20a and 20b herein which illustrates schematically a first 2000 and a second 2000' front perspective view of a blade for a demolition shear in accordance with a sixth embodiment of the present invention. The blade body 2001 comprising five main walls: 2002, 2003, 2004, 2005 and 2006. The first 2002 and second 2003 walls being longitudinal, arranged in parallel directly opposite one another and spaced apart from each other; and the third 2004 and fourth 2005 end walls, also located opposite each other, and spaced apart from each other so that the first and second longitudinal walls extend between the third and fourth walls (or first and second end walls) 2004, 2005 to form a cavity there between. End walls 2004 and 2005 which span between the first 2002 and second 2003 longitudinal walls 4 are curved and extend continuously between the front wall 2006 walls 2002 and 2003. The blade is symmetrical about a plane extending between said first and second end walls.

The five walls 2002, 2003, 2004, 2005 and 2006 define a cavity for receiving the tang of a moving jaw or machine tool therein. The blade body 2001 fits over the tang forming a protective shell which extends around each of the four sides of the tang, and across an outwardly facing front face of the tang.

Preferably, each of the five walls are constructed from welded plate metal sheeting, precision machined steel, 3D-printed or cast molded as a single piece. In other variations, the blade may be cast as a single piece component, and the edges and outer faces of the wall may be heat treated and/or face hardened or made from pre-hardened materials e.g. pre-hardened steel.

The first 2002 and second longitudinal 2003 walls each comprise an open outer edge 2007 which runs along the length of the first or second walls and is indented at a midpoint 2008.

At a first end 2009 of the body 2001, between the first longitudinal wall 2002, the end wall 2005 and the front wall 2006, there is a first planar face 2011 which has edges *a*, *b, c*, which intersect respectively the first longitudinal side wall 2002, the first end wall 2005, and the front wall 2006. The front wall 2006 having a convex outwardly facing surface.

At a second side of the first end 2009 of the body 2001, there is a second planar face 2012, the edges of which *a*, *b and c* respectively intersect the second longitudinal side wall 2003, the first end wall 2005 and the front wall 2006. When the body 2001 is facing north longitudinally, the first face 2011 faces in a south west direction and the second face 2012 faces in a south east direction.

At a second end 2010 of the body 2001, between the first longitudinal wall 2002, the end wall 2005 and the front wall 2006, there is a third planar face 2013 which has edges *a*, *b, c*, which intersect respectively the first longitudinal side wall 2002, the first end wall 2005, and the front wall 2006.

On another side of the second end 2010 the body 2001, there is a second planar face 2014, the edges of which *a*, *b and c* respectively intersect the second longitudinal side wall 2003, the first end wall 2005 and the front wall 2006. When the body 2001 is facing North longitudinally, the third face 2013 faces in a North West direction and the second face 2014 faces in a North East direction.

The first 2011, second 2012, third 2013 and fourth 2014 faces each having an angle of approximately 45° with respect to the longitudinal body of the blade.

The fifth face 2015 extends between the front wall 2006 and the first longitudinal side 2002. When the body 2001 is facing north longitudinally, the fifth face 2015 faces east. The fifth face 2015 is the result of chamfering the outer edge of the interface between the front wall 2006 and the first side 2002. The chamfering results in vertices 13 and 14.

A sixth face 2016 extends between the front wall 2006 and the second longitudinal side 2003. The sixth face 2016 is the result of chamfering the outer edge of the interface between the front wall 2006 and the second side 2003. The chamfering results in vertices 2 and 3. The body 2001 having 20 vertices in total (see 1 to 20). The angled planar faces 2011 and 2013 providing a stronger edge between the end walls 2004, 2005 and a fifth face 2015 and also functioning to distribute pressure when the blade is in use piecing. Angled planar faces providing a stronger edge between 2012 and 2014 and a sixth face 2016 and also functioning to distribute pressure when the blade is in use piecing.

An intersection between said first end wall 2004 and the front wall 2006 defines a first piercing tip 2017, at an end 2010 of the blade body. An intersection between the second end wall 2005 and the front wall 2006 defines a second piercing tip 2018 at a further end 2009 of the blade body.

The first piercing tip 2017 comprises a seventh planar face 2019 at an end 2010 of the body between the first end wall 2004 and the front face 2006, and lying between the third 2013 and fourth 2014 faces.

The second piercing tip 2018 comprises a seventh planar face 2020 at an end 2009 of the body between the second end wall 2005 and the front wall 2006, and lying between the first 2011 and second 2012 faces. The blade is symmetrical about a plane extending between said first and second end walls.

Alternatively, the first piercing tip 2017 may comprise an edge, a flat surface or a curved surface between the first end wall 2004 and the front wall 2006; and the second piercing tip 2018 may comprise an edge, a flat surface or a curved surface between the second end wall 2005 and the front wall.

The first 2002 and second 2003 walls each have three apertures 2021 which span between the inner 2002i, 2003i, and outer faces 202o, 203o of the sides of the walls 2002 and 2003 to receive fixings, for examples threaded bolts, barrels nuts or dowels. The apertures on one wall 2002 or 2003 may be of larger diameter than those on the opposing wall 2002 or 2003 to accommodate co-operable fittings. The single-piece blade B comprises: first and second shearing edges 2023, 2024 and first and second guide-side edges 2025, 2026.

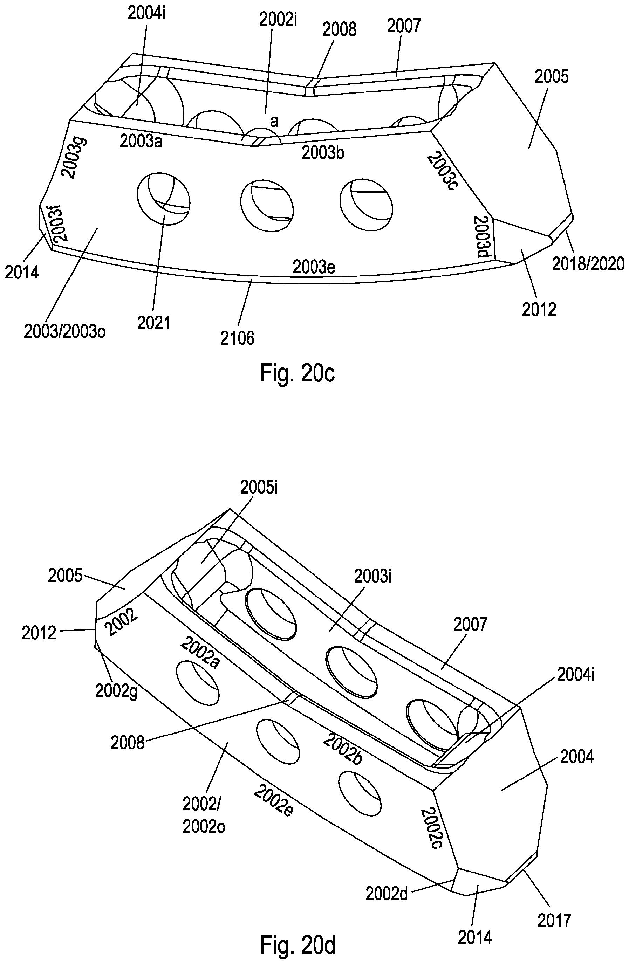

Referring to Figures 20c and 20d, the first 2002 and second 2003 walls comprise first and second sides having an inner face 2002i, 2003i and an outer face 2002o, 2003o; the inner faces of the walls 2002i, 2003i facing each other across the cavity. The third 2004 and fourth 2005 end walls having an inner surface 2004i, 2005i and the inner surfaces 2004i, 2005i facing each other at opposite ends of the cavity. Each of the first and second longitudinal walls 2002, 2003 having seven edges 2002a, 2002b, 2002c, 2002d, 2002e, 2002f, 200g and 2003a, 2003b, 2003c, 2003d, 2003e, 2003f, 2003g respectively, extending around a perimeter of the corresponding respective outer face of the side. Edges 2002e and 2003e each having an arc profile and being longer in length than the collective sum of edges 2002a & 2002b or 2003a & 2003b such that the bottom closed edges 2002e, 2003e of the first second sides are longer than the top outwardly facing open edges 2007. An angle a of approximately 130-180° extends between each of edges 2002a & 2002b and 2003a & 2003b. There is a visible indent or notch 2008, which represents the radi between the first and second flat faces of edges 2002a&b and 2003a&b respectively. Alternatively, it will be appreciated that edges 2002e and 2003e may be a straight or angled flat surfaces, or any combination thereof.

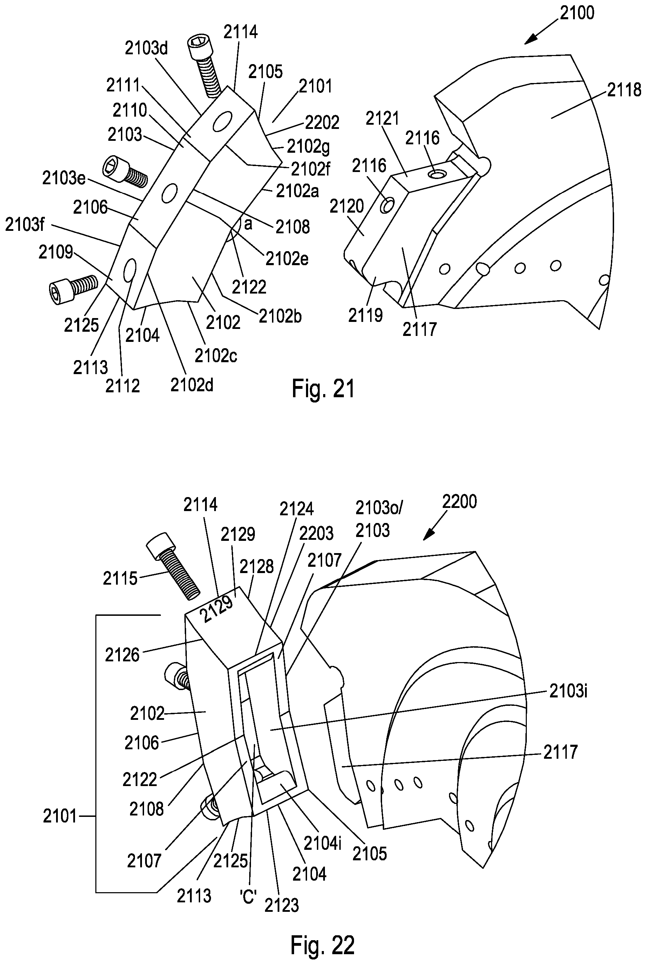

Figure 21 and 22 herein illustrate schematically front 2100 and rear 2200 exploded perspective view of a blade for a demolition shear and a corresponding tang of a moving jaw in accordance with a seventh embodiment of the present invention respectively. The blade for a demolition shear in accordance with a seventh embodiment of the present invention comprising a blade body 2101 comprising five walls: 2102, 2103, 2104, 2105 and 2106. The first 2102 and second 2103 walls being longitudinal sides, arranged in parallel directly opposite one another and spaced apart from each other; and the third 2104 and fourth 2105 end walls, also located opposite each other, and spaced apart from each other so that the first and second longitudinal walls extend between the third and fourth walls (or first and second end walls) 2104, 2105 to form a cavity there between. The first 2102 and second 2103 walls having first and second sides comprising an inner face 2102i, 2103i and an outer face 2102o, 2103o respectively; the inner face 2102i, 2103i of the walls 2102, 2103 facing each other across the cavity. The third 2104 and fourth 2105 end walls having inner surfaces 2104i, 2105i which face each other at opposite ends of the cavity. The blade is symmetrical about a plane extending between said first and second end walls.

Preferably, the blade is precision machined from a single block of steel. In other variations, the blade may be cast as a single piece component, 3D printed, or a fabricated construction welded as a single piece, and the edges and outer faces of the wall may be heat treated and/or face hardened.

The first 2102 and second longitudinal 2103 walls each comprise an open outer edge 2107 which runs along the length of the first or second walls.

Each of the first and second walls has a respective outer edge 2108. The outer edges 2108 form outer edge perimeter of the fifth or front wall 2106, which extends between each of the first 2102 and second 2103 longitudinal walls and the first and second end walls 2104, 2105. The five walls 2102, 2103, 2104, 2105 and 2106 define a cavity c for receiving the tang of a moving jaw or machine tool therein. The five walls of the body fit over the tang forming a protective shell which extends around each of the four sides of the tang, and across an outwardly facing front face of the tang.

The first 2102 and second 2103 walls each having seven edges 2102a, 2102b, 2102c, 2102d, 2102e, 2102f, 2102g and 2103a, 2103b, 2103c, 2103d, 2103e, 2103f, 2103g respectively, extending around a perimeter of the corresponding respective outer face of each wall. The fifth wall 2106 has a first side comprising three flat faces 2109, 2110, 2111 comprising edges 2102a, 2102b, 2102c, 2102d, 2102e, 2102f, 2102g and 2103a, 2103b, 2103c, 2103d, 2103e, 2103f, 2103g of the first 2102 and second 2103 longitudinal walls. The three flat faces 2109, 2110, 2111 each having an aperture 2112 extending between a first and second side of the fifth wall for receiving a fixing corresponding threaded bolt 2115 therethrough. The single-piece blade B comprises first and second shearing edges 2125, 2126 and first and second guide-side edges 2127, 2128.

An intersection between said first end wall 2104 and the front wall 2106 defines a first piercing tip 2113, and an intersection between the second end wall 2105 the front wall 2106 defines a second piercing tip 2114. Piercing tip 2113 comprising an edge between the first end wall and the front wall. Piercing tip 414 comprising an edge between the second end and the front wall.

Referring to longitudinal wall 2102, the collective sum of the edges 2102d, 2102e, 2102f of the flat faces 2109, 2110, 2111 are longer than the collective length of edges 2102a & 2102b. Similarly, longitudinal side 2103, the collective sum of the edges 2103d, 2103e, 2103f of the flat faces 2109, 2110, 2111 are longer than the collective length of edges 2103a & 2103b. Therefore, the front wall 1206 is longer than the open edges 1207 of the longitudinal walls. Consequently, end walls 1204 and 1205 which span between the first and second longitudinal walls 1202, 1203 are curved to provide a continuous wall which extends between the longer and short edges of each of 1202 and 1203. Alternatively, it will be appreciated that ends 1204 and 1205 may be straight or angled flat surfaces, or any combination thereof.

Threaded bolts 2115 are received through apertures 2112 in the flat faces 2109, 2110, 2111 of the fifth wall 2106, through the wall and into complementary threads 2116 on the tang 2117 of the moving jaw 2118 of the demolition shear. The tang 2117 having a lower lobe 2119, a flat front surface 2120 and a flat upper surface 2121 receivable into the cavity c of the blade body 2101. It will be readily apparent to a person skilled in the art than alternative fasteners may be used.

An angle a of approximately 130-180° extends between each of edges 2102a & 2102b and 2103a & 2103b. There is a visible indent or notch 2122, which represents the radi between the first and second flat faces of edges 2102a&b and 2103a&b respectively.

The blade end walls 2104 and 2105 each having four edges which correspond to an upper edge 2123, 2124 a shear edge 2125, 2126, a guide edge 2127, 2128 and a lower edge 2129. The first and second ends of the lower edge 2129 in combination with the fifth wall 2106 forming piercing tip 2113 and 2114 respectively.

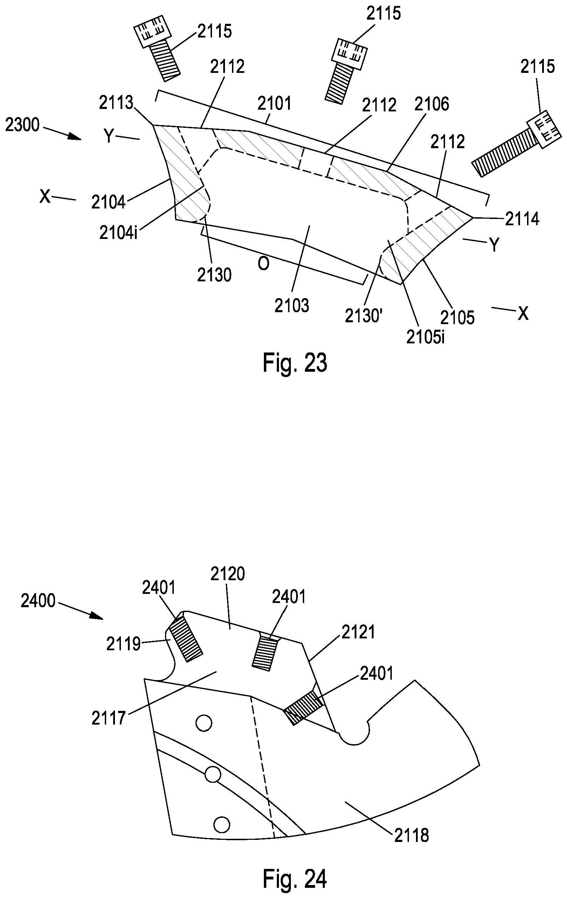

Figure 23 herein illustrates schematically a cut through view 2300 of a blade 2101 for a demolition shear and a corresponding fixings 2115 in accordance with a seventh embodiment of the present invention. From the cross section, only the second longitudinal wall 2103 of the blade body 2101 is visible, as are third 2104 and fourth 2105 walls, or substantially transverse walls, spaced apart from one another and the fifth wall 2106. The walls forming a cavity there between. The inside surfaces 2104i, 2105i of the first 2104 and second 2105 end walls are visible. Each inside surface 2104i, 2105i having protrusions 2130, 2130' which merge continuously via flats 2131, 3131' into an inner side of the front wall 2106; demonstrating the single-piece machined nature of the demolition blade of the present invention.

The first end wall 2104 (third wall) is thicker than the thickness of the front wall (fifth wall 2106). The first end wall 2104 comprises a protruding portion 2103, which faces inwardly to the central cavity formed between the first and second longitudinal walls, the third and fourth walls 2104, 2105 and the fifth wall 2106 such that the open end of the cavity 'o' forms a mouth which is more constricted than the relatively wider internal dimension of the cavity between the third and fourth walls.

The second end wall 2105 is thicker than the thickness of the front wall 2106. The second end wall 2105 comprises a protruding portion 2130', which faces inwardly to the central cavity formed between the first and second longitudinal sides, the third and fourth walls 2104, 2105 and the fifth wall 2106 such that the open end 'o' of the cavity forms a mouth which is more constricted than the relatively wider internal dimension of the cavity between the third and fourth walls (or first and second end walls) 2104, 2105.

As shown the inwardly facing surfaces or protrusions 2130, 2130' are concave. The distance between opposed protrusions 2130, 2130' is smaller than the distance between the internal surfaces of flat faces 2131, 2131'. The length of an internal perimeter around a cross-section X - X' on the inside of the cavity on a first side of the apertures in the side walls which draw around the first and second longitudinal side walls, and the third and fourth end walls and which is nearer to the open end of the cavity and between the open mouth of the cavity and the set of circular apertures in the longitudinal side walls, is shorter than the length of a second internal perimeter Y-Y' drawn around the inside of the cavity on the first and second longitudinal side walls and the third and fourth end walls deeper into the cavity, and beyond the apertures in the longitudinal walls of the body, so that the protrusions 2130, 2130' form a restricted area entrance or opening 'o; to the cavity, compared to the area of the cavity as viewed in the same direction, deeper within the cavity and nearer to the front wall 2106.

Figure 24 herein illustrates schematically a partial cut through view 2400 of a tang 2117 of a moving jaw 2118 compatible with a blade according to the seventh embodiment of the present invention. The tang 2117 comprising a lobe 2119, a flat front surface 2120 and a flat upper surface 2121 receivable into the cavity c of the blade body 2101. Each of 2119, 21120, and 2121 comprising a threaded aperture 2401 for receiving complementary threaded bolts 2115 therein. It will be readily apparent to a person skilled in the art than alternative fasteners may be used e.g. fitted bolts, or male and female bolts.

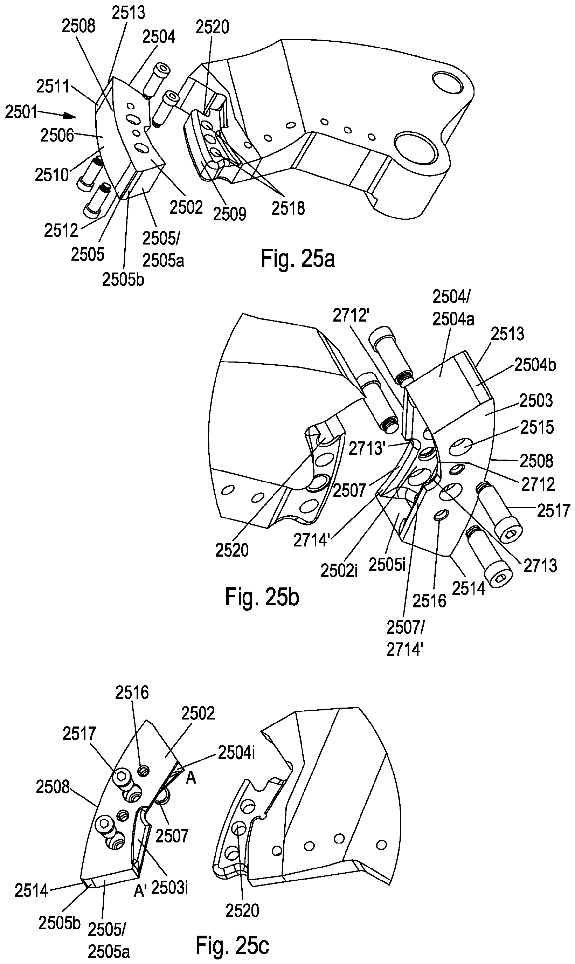

Figures 25a, 25b and 25c herein illustrate schematically first second and third exploded perspective views of a blade for a demolition shear and corresponding fixings in accordance with an eighth embodiment of the present invention. The blade comprising a blade body 2501 comprising five walls: 2502, 2503, 2504, 2505 and 2506. The first 2502 and second 2503 longitudinal walls, arranged in parallel directly opposite one another and spaced apart from each other; and the third 2504 and fourth 2505 walls, being end walls, also located opposite each other, and spaced apart from each other so that the first and second longitudinal walls extend between the third and fourth walls (or first and second ends) 2504, 2505 and the firth wall 2506 to form a cavity there between. The first 2502 and second 2503 walls each having first and second sides. The first sides having inner faces 2502i, 2503i which face each other across the cavity. The third 2504 and fourth 2505 end walls having an inner surface 2504i, 2505i; the inner surfaces 2504i, 2505i facing each other at opposite ends of the cavity.

Preferably, the blade is precision machined from a single block of steel. In other variations, the blade may be cast as a single piece component, 3D printed, or a fabricated construction welded as a single piece, and the edges and outer faces of the wall may be heat treated and/or face hardened. The first 2502 and second longitudinal 2503 walls each comprise an open outer edge 2507 which runs along the length of the first or second walls.

Each of the first and second walls has a respective outer edge 2508. The outer edges 2508 also forming an outer edge perimeter of the fifth wall (or front wall) 2506, which extends continuously between each of the first 2502 and second 2503 longitudinal walls and the first and second end walls 2504, 2505. The five walls 2502, 2503, 2504, 2505 and 2506 define a cavity for receiving the tang 2509 of a moving jaw or machine tool therein. The five walls of the blade body fit over the tang forming a protective shell which extends around each of the four sides of the tang, and across an outwardly facing front face of the tang.

A first side of the front wall 2506 comprises: a central curved portion 2510 which is continuous with first 2511 and second 2512 flat surfaces. A first side of the front wall 2506 having an overall convex outwardly facing surface. Each of the first 2511 and second 2512 flat surfaces are connected about a radius 2513, 2514 to the first or second end walls 2504 or 2505 respectively. The radii 2513. 2514 provide first and second piercing ends respectively. Each of end walls 2504 and 2505 comprise a first 2504a, 2505a and second 2504b, 2505b flat face. The first and 2504a, 2505a and second 2504b, 2505b flat faces being arranged continuously to form sides 2504 and 2505.

The collective length of the front face (i.e. continuous central curved portion 2510, continuous with first 2511 and second 2512 outer flat surfaces) is greater than the distance between the A-A' as shown in Figure 25c such that front wall 2506 has a substantially arced profile overall and such that end walls 2504 and 2505 slope inwardly towards the open ends 2507 of the first 2502 and second 2503 longitudinal walls.

Each of the first 2502 and second 2503 walls comprise two larger 2515 and two smaller 2516 apertures for receiving the heads and the tapered ends of fitted bolts 2517 therethrough. Two fitted bolts extend though apertures 2515 in the first side 2502 though apertures 2518 in the tang of the tool, and into corresponding threaded apertures 2516 of the second wall 2503. Two further fitted bolts extend though apertures 2515 in the second wall 2503 though aperture 2519 and a partial aperture or groove 2520 in the tang of the tool, and into corresponding threaded apertures 2516 of the first wall 2502. In the embodiment shown, the outer diameter of the fitted bolts 2517 fit within the inner diameter of aperture 2515.

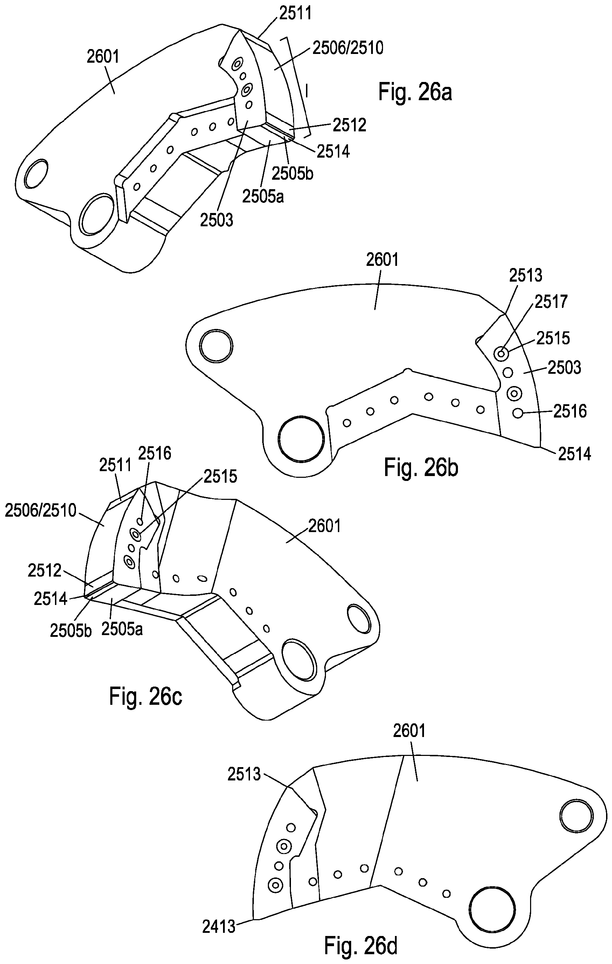

Figures 26a, 26b, 26c and 26dc herein illustrate schematically; a first perspective view, a first side view, a second perspective view and a second side view of blade for a demolition shear and a corresponding fixings fitted to the tang of a machine tool in accordance with an eighth embodiment of the present invention. The same nomenclature as Figures 25a-c is used. The single-piece is fitted along its longitudinal axis I over the tang of the moving jaw 2601. When in position, the blade is secured to the tang of the jaw with four hexagonal headed fitted bolts 2517. The blade may be orientated with the first piercing tip 2513 facing upwardly with the second piercing tip 2514 facing downwardly, presented for use; or alternatively the blade may be orientated with the second piercing tip 2514 upwardly with the first piercing tip 2513 presented for use. To change the orientation between which of the first 2513 and second 2514 piercing tips are presented, the blade is simply rotated 180°. The blade is asymmetrical about a plane extending between said first and second end walls.

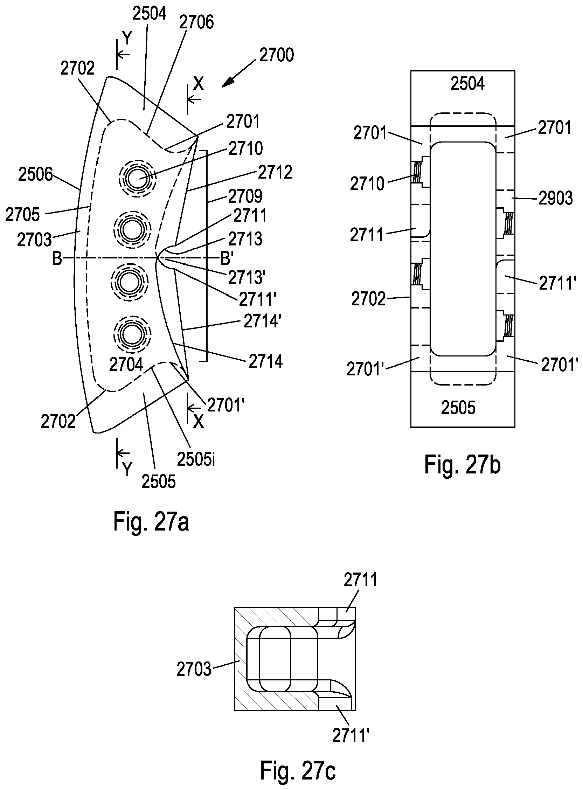

Referring to figure Figure 27a herein there is shown a cross-sectional view 2700 of a blade for a demolition shear in accordance with an eighth embodiment of the present invention. The inner surfaces 2504i and 2505i of the first 2504 and second 2505 end walls are visible. The inner surfaces 2504i, 2505i each comprising first and second protrusions 2701, 2701' which merge continuously via curves 2702, 2702' into the wall 2703 of the front side 2506; demonstrating the single-piece precision machined nature of the demolition blade.

The first end wall 2504 (third wall) is thicker than the thickness of the front wall 2506. The first end wall 2504 comprises a protruding portion 2701, which faces inwardly to the central cavity formed between the first and second longitudinal sides, the third and fourth walls 2504, 2505 and the fifth wall 2506 such that the open end of the cavity forms a mouth which is more constricted than the relatively wider internal dimension of the cavity between the third and fourth walls. The distance between opposed protrusions 2701, 2701' is smaller than the distance between the internal surfaces of lobes 2702, 2702'. The length of an internal perimeter around a cross-section X - X', looking in the direction of the arrow, on the inside of the cavity on a first side of the apertures in the side walls which draw around the first and second longitudinal side walls, and the third and fourth end walls and which is nearer to the open end of the cavity and between the open mouth of the cavity and the set of circular apertures in the longitudinal side walls, is shorter than the length of a second internal perimeter Y-Y', looking in the direction of the arrow, drawn around the inside of the cavity on the first and second longitudinal walls and the third and fourth end walls deeper into the cavity, and beyond the apertures in the longitudinal sides of the body, so that the protrusions 2701, 2702' form a restricted area entrance to the cavity, compared to the area of the cavity as viewed in the same direction, deeper within the cavity and nearer to the front wall 406.

As shown in Figure 27a, the central cavity region formed by the first to fifth walls 2502 - 2506 comprises first and second longitudinal faces 2704, formed by the inwardly facing portions of the exposed first and second longitudinal walls; a concave inwardly facing curved front surface 2705 on the inside of the front wall 2506; and first a substantially "S" shaped end face 2706 facing inwardly from the third wall 2504; a second substantially" S" shaped surface 2707 at the opposite end of the cavity to the first end face 2706; the first and second S - shaped surfaces forming the first and second protruding portion 2707, 2701' respectively.

At an intersection of a first end of the inwardly facing curved front surface 2705 and the first S-shaped end face 2504 there is a concave surface, and nearer the open mouth 2709, the first S-shaped portion forms a convex surface at the position of the first protruding portion 2701.

At an intersection of the second end of the inwardly facing curved front surface 2703 and the second S-shaped end face there is a concave surface 2702 inside the cavity, and nearer to the open mouth, the second S-shaped portion forms a convex surface 2701 at the position of the second protruding portion 2701'.

Figure 27b herein illustrates schematically a view of a single-piece blade for a demolition shear, from angle X-X of Figure 27a in accordance with an eighth embodiment of the present invention. The convex portions 2701, 2701, protrude inwardly towards the centre of the cavity compared to the outer perimeter 2709 forming the open mouth on the underside of the blade, into which the tang of the demolition shear is inserted. The length of the open mouth in the longitudinal direction along the blade is longer than the distance between the two protruding convex portions 2701, 2701'. When inserting the tang into the cavity, the tang must be passed through the open mouth perimeter 2709, and past the projecting convex portions 2701, 2701' so that a forward lip of the tang can locate in the relatively larger portion of the cavity 2702, 2702'. As viewed inside view, the internal cavity comprises a relatively narrower entrance portion between the first and second convex portions 2701, 2701' which leads into a more cavernous bulged section inside the blade outer shell comprising first and second longitudinal side walls, first and second end walls, and the front wall. Threaded apertures 2710 for receiving the fitted bolts therein are visible in the first and second sides. The outer curved edges 2711, 2711' of the open mouth 2709 are visible. The open outer edges 2711, 2711' of the first and second sides 2502, 2503 each comprise a first flat face 2712, 2712' continuous with a curved portion 2713, 2713' and a second flat face 2714, 2714' which in combination with the inner surfaces 2504i, 2505i of the end walls define the open mouth 2709. The first curved portion 2173 facing in a first direction relative to the longitudinal body, the second curved portion 2173' facing in a second opposite direction relative to the longitudinal body of the blade. Consequently, the blade is asymmetrical about a longitudinal plane bisecting the front wall 2508 and end walls 2504, 2505, said longitudinal plane extending between the first and second piercing ends. Although, the blade is asymmetrical about a longitudinal plane bisecting the front wall 2508 and end walls 2504, 2505, it is rotationally symmetric when rotated about a rotational axis perpendicular to the centre of the outer face of the front wall. Figure 27c herein illustrates schematically a cross-sectional view of a one-piece, blade for a demolition shear, along axis B-B of Figure 27a in accordance with a first embodiment of the present invention. The figure shows the "S" shaped end faces 2706, 2707, and a cut away view through the first and second longitudinal side walls and the front wall.

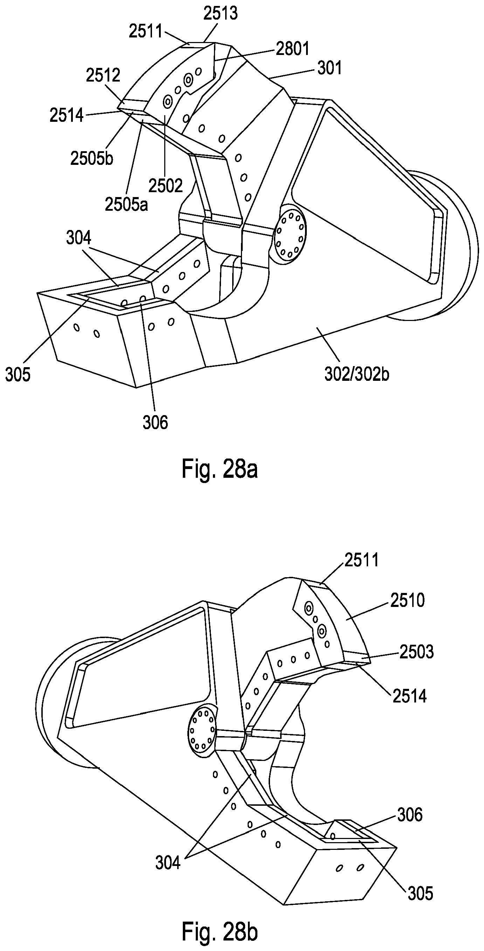

Referring to Figures 28a and 28b, each of which illustrate schematically a perspective view of a blade for a demolition shear and shear assembly in accordance with an eighth embodiment of the present invention; like numerals denote like parts to previous illustrations. The demolition shears comprise an upper moveable jaw 301/501 and a co-operable lower stationary jaw 302. The upper moveable jaw 301 being pivotally attached to the fixed lower jaw by a hydraulically or pneumatically driven pivot mechanism 303, such that the upper jaw is linearly moveable with respect to the lower fixed jaw to open and close the shears. It will be readily understood than alternative actuators or pivot/hinge mechanisms may be used.

The fixed jaw 302 comprises a main body 302b and a set of hardened blades, preferably pre-hardened steel seated in recesses 302r within the lower jaw body 302b. The set of lower blades comprising two main blades 304, a razor or end blade 305 and a guide blade 306 set opposite one another, each blade being detachably mounted to the main body 302b by bolts to collectively provide efficient guiding and cutting when used against the moveable jaw. The main blades 304 and the guide blade are arranged in parallel at substantially opposing sides of the main body 302b, the razor or end blade 305 extending laterally from an edge of one of the main blades 304 to the guide blade 306. The fixed lower jaw blade set 304, 305 and 306 defining a cavity c for receiving the narrower upper jaw 301 therein. It will be readily understood that the single piece blade (or tip) of the present invention may be used with any combination of blades on the lower jaw, for example: two main blades, an end blade and two guide blades; two main blades, an end blade and one guide blade; one main blade, an end blade and two guide blade or one main blade, an end blade and one guide blade.

The upper moveable jaw 301 is fitted with first 001 and second 002 main blades and comprises a single-piece blade mounted on the front projection of the main body 301b/501b of the upper jaw. The blade B provides a shearing or cutting action when working against the blades of the fixed jaw. The single-piece blade B comprises: first and second piercing edges 2513, 2514 first and second shearing edges 2801, 2802 and first and second guide-side edges 2803, 2804. The piercing tips or piercing portions 2513, 2514 define the two outer limits of the blade *B*, through which the maximum force of puncturing is applied. The shearing edges 2801, 2802 engaging with the main blades 304 on the opposing fixed jaw 302, so as to make a shearing or cutting action. Each shearing edge 2801, 2802 in use, is presented for shearing. The guide-side edges 2803, 2804 each functioning to align the narrower upper jaw with the guide blade 306 as it moves within the cavity *c* of the lower jaw, to aid with shearing.

The upper blade *B* of the upper moveable jaw is attached over the tang (boot or tip) of the moveable jaw 301 and is fixed with fitted bolts 2715 received though corresponding apertures 2515, 2516, 2518, 2520 in the blade *B* and the tang. In use, the moveable jaw closes towards the fixed jaw to pierce or cutting materials between the blades of the upper and lower jaws. It will be readily understood that the blade of the present invention is rotatable 180°. The blade may be orientated in a first orientation with the first piercing tip 2513 facing the nose of the moving jaw body and with the second piercing tip 2514 being presented for use; or alternatively the blade may be orientated in a second orientation with the second piercing tip 2514 adjacent to the nose portion 2805 of the moving jaw body 301b and the first piercing tip 2513 presented for use. To change the orientation between which of the first 2513 and second 2514 piercing tips are presented, the blade is simply rotated 180° by removing the blade from the tang, rotating its orientation 180° and re-fitting the blade to the tang. This is particularly advantageous when one of the piercing tips has been used or blunted and a further or sharper cutting edge is required.

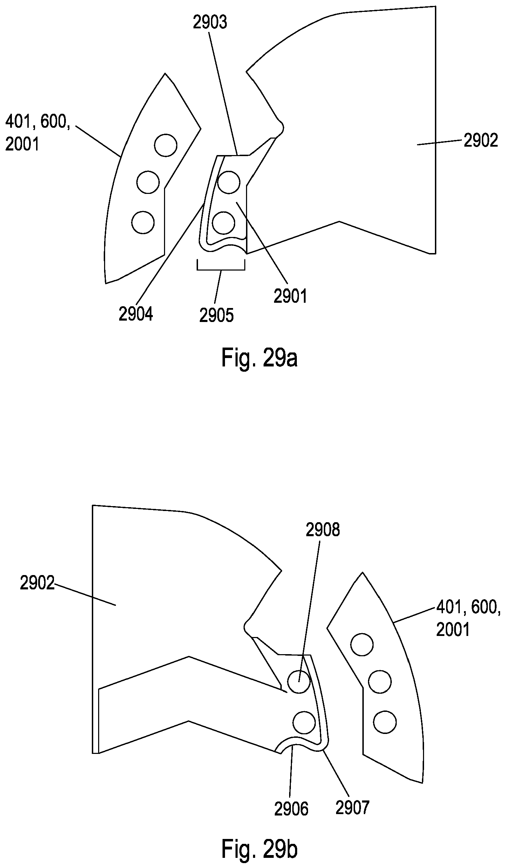

Figures 29a and 29b herein illustrate schematically first and a second side views of an alternative tang arrangement compatible with any of the first, second, third, fourth or sixth embodiments of the present invention. The tang 2901 is a projection of the moving arm or jaw 2902 of a demolition shear. The tang 2901 comprising a first flat surface 2803, a curved front surface 2804 and a lower surface 2905. The lower surface 2905 having an 'S' shaped profile comprising an inwardly curved portion 2906 and an outwardly curved portion or lobe 2907. The tang having two apertures 2908 for receiving fixings to secure a blade thereto. It will obvious to a person skilled in the art that the blades of the present invention are compatible with a variety of tang configurations and that the number of apertures in the blade may be altered to achieve compatibility with a given tang. There are an infinite amount of possible combinations.

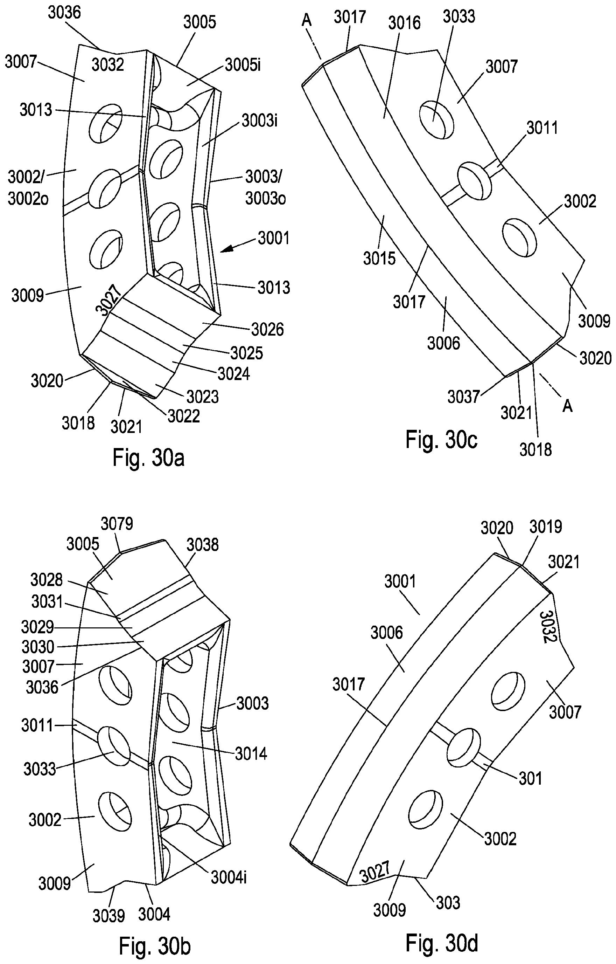

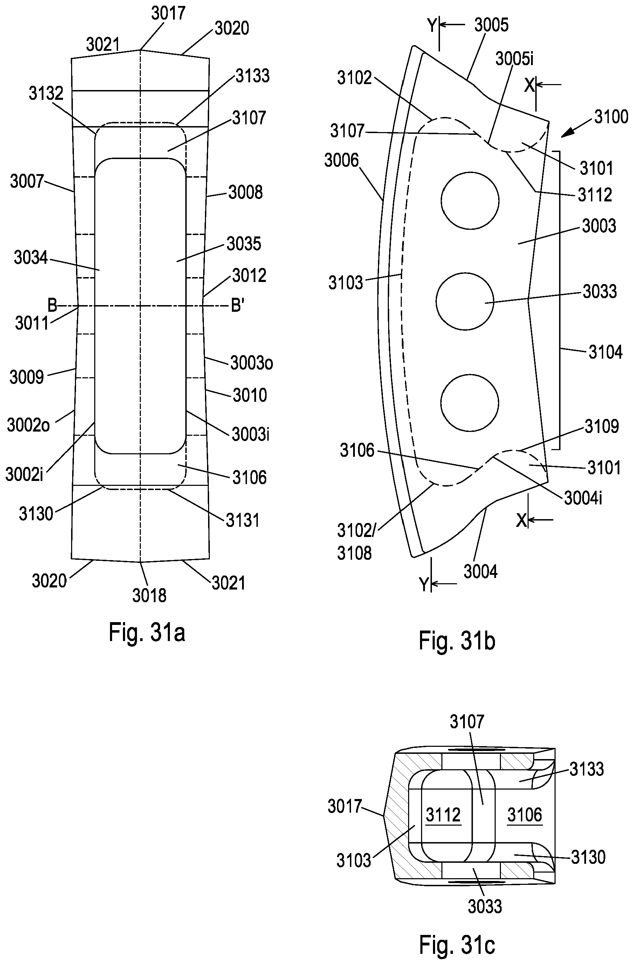

Referring to Figures 30a, 30b, 30c and 30d herein illustrate schematically first, second third and fourth perspective views of a blade for a demolition shear in accordance with a ninth embodiment of the present invention. The blade comprises a blade body 3001 comprising five walls: 3002, 3003, 3004, 3005 and 3006. The first 3002 and second 3003 being longitudinal walls, arranged directly opposite one another and spaced apart from each other; and the third 3004 and fourth 3005 walls, being end walls, also located opposite each other, and spaced apart from each other so that the first and second longitudinal sides extend between the third and fourth walls (or first and second end walls) 3004, 3005 to form a cavity there between. The first 3002 and second 3003 longitudinal ends each having a first side comprising a flat inner face 3002i, 3003i. The inner faces 3002i, 3003i being arranged substantially parallel to one another and facing each other across the cavity. The first 3002 and second 3003 sides each having a second side comprising outer faces 3002o, 3003o each outer face comprising first 3007, 3008 and second 3009, 3010 flat faces which are joined at radii 3011 and 3012 respectively. Consequently, the outer walls or faces 3002o, 3003o of sides 3002, 3003 appear synched or indented (see Figure 31a).

The third 3004 and fourth 3005 walls, each having an inner surface 3004i, 3005i and an outer surface 3004o, 3005o respectively. The inner surfaces 3004i, 3005i facing each other at opposite ends of the cavity.

At the first end inside the cavity, inner surface 3004i of the first end wall (third wall 3004) connects to the inner surface of the first side wall 3002 via a smooth rounded transition 3130 within the cavity, and the inner surface 3004i of the first end wall transitions to the inner surface of the second sidewall 3003 via smooth rounded concave surface 3131 inside the cavity.

Similarly, at the second end of the cavity, inner surface 3005i of the second end wall (fourth wall 3005) connects to the inner surface of the first sidewall 3002 via smooth rounded transition 3132 within the cavity; and the inner surface 3005i of the second end wall (fourth side 3005) joins to the inner surface of the second side 3003 via concave smooth rounded transition 3133 within the cavity.

The first 3002 and second longitudinal 3003 walls each comprise an open outer edge 3013 which runs along the length of the first or second sides. The five sides 3002, 3003, 3004, 3005 and 3006 define a cavity for receiving the tang of a moving jaw or machine tool therein via opening 3014. The five walls of the body fit over the tang forming a protective shell which extends around each of the four sides of the tang, and across an outwardly facing front face of the tang. The blade is symmetrical about a plane extending between said first and second end walls.

The fifth or front wall 3006 comprises a first side having first 3015 and second 3016 flat faces which are arranged at an angle to one another to form an apex 3017 which runs down the longitudinal length of the blade body 3001. An intersection between the first end wall 3004 and the front wall 3006 defines a first piercing tip 3018 and an intersection between the second end wall 3005 and the front wall 3006 defines a second piercing tip 3019. The piercing tips 3018 and 3019 each comprising two flat faces 3020, 3021 which meet at a point of apex, forming a ridge which extends between the first and second end walls of the blade. Each of the flat faces 3020, 3021 have substantially the shape of a frustoconical segmental arch, or a segment of a frustoconical ring.

The outer side of the third 3004 end wall comprises a series of flat faces 3022, 3023, 3024, 3025 and 3026 arranged continuously. These flat faces extend between the first 3002 and second 3003 longitudinal sides and follow the irregular form of the lower edge 3027 of the first 3002 and second 3003 longitudinal sides.

The outer side of the fourth end wall 3005 also comprises a series of flat faces 3028, 3029 and 3030. A radius 3031 is present between flat faces 3028 and 3029. Each of 3028, 3029, 3030 and 3031 being arranged continuously and extending between the first 3002 and second 3003 longitudinal walls. Each of 3028, 3029, 3030 and 3031 following the irregular form of the upper edge 3032 of the first 3002 and second 3003 longitudinal walls. First 3036 and second 3037 shearing edges and first 3038 and second 3039 guide edges are also provided.

The first 3002 and second 3003 walls each have three apertures 3033 which span between the inner 3002i, 3003i, and outer faces 3002o, 3003o of walls 3002 and 3003 and are capable of receiving fittings or fixings therethrough. The apertures may consequently have a thread for complementarity with appropriate fittings e.g. male and female bolts or threaded bolts. Alternatively, they be unthreaded for compatibility with rods dowels or dowels and spring clips. However, it will be readily understood that alternative fasteners may be used.

Preferably, each of the sides are precision machined from a single block of steel. In other variations, the blade may be cast as a single piece component, 3D printed or a made from a fabricated construction welded as a single piece, and the edges and outer faces of the wall may be heat treated and/or face hardened.

Figure 31a herein illustrates schematically a view of a single-piece, blade for a demolition shear, along axis A-A of Figure 30c in accordance with a ninth embodiment of the present invention. The same nomenclature as Figures 30a-d are used. The central cavity region formed by the first to fifth walls 3002 - 3006 comprises first 3034 and second 3035 longitudinal faces, formed by the inwardly facing sides 3002i, 3003i of the first and second longitudinal walls.

Referring to Figure 31b, there is shown a cross-sectional view 3100 of a blade for a demolition shear, along axis A-A of Figures 30c and Figure 31a in accordance with a ninth embodiment of the present invention. The cross-section shows the second longitudinal wall 3003 and first 3004 and second 3005 end walls and the inner surfaces 3004i, 3005i of the third and fourth end walls. Each of the inner surfaces 3004i, 3005i of the third and fourth end walls comprises an inwardly facing protrusion 3101, 3101'. These protrusions merge continuously via curves 3102, 3102' into the wall 3103 of the front side 3006; demonstrating the single-piece precision machined nature of the demolition blade.

The first end wall 3004 (third wall) is thicker than the thickness of the front wall (fifth wall 3006). The first end wall 3004 comprises a protruding portion 3101, which faces inwardly to the central cavity formed between the first and second longitudinal sides, the third and fourth walls 3004, 3005 and the front wall 3006 such that the open end of the cavity forms a mouth 3104 which is more constricted than the relatively wider internal dimension of the cavity between the third and fourth sides. The distance between opposed protrusions 3101, 3101' is smaller than the distance between the internal surfaces of lobes 3102, 3102'. The length of an internal perimeter around a cross-section X - X', looking in the direction of the arrow, on the inside of the cavity on a first side of the apertures in the side walls which draw around the first and second longitudinal side walls, and the third and fourth end walls and which is nearer to the open end of the cavity and between the open mouth of the cavity and the set of circular apertures in the longitudinal side walls, is shorter than the length of a second internal perimeter Y-Y', looking in the direction of the arrow, drawn around the inside of the cavity on the first and second longitudinal side walls and the third and fourth end walls deeper into the cavity, and beyond the apertures in the longitudinal sides of the body, so that the protrusions 3101, 3101' form a restricted area entrance 3104 to the cavity, compared to the area of the cavity as viewed in the same direction, deeper within the cavity and nearer to the front wall 3006. When inserting the tang into the cavity, the tang must be passed through the open mouth 3104, and past the projecting convex portions 3109, 3112.

As viewed inside view, the internal cavity comprises a relatively narrower entrance portion 3104 between the first and second convex portions 3101, 3101' which leads into a more cavernous bulged section inside the blade outer shell comprising first and second longitudinal side walls, first and second end walls, and the front wall. The central cavity region is formed by the first to fifth sides 3002 - 3006; a concave inwardly facing curved front surface 3105 on the inside of the front side (fifth side 3006); and first a substantially "S" shaped end face 3106 facing inwardly from the third side 3004; a second substantially" S" shaped surface 3107 at the opposite end of the cavity; the first and second S - shaped surfaces forming the first and second protruding portion 3101, 3101' respectively. At an intersection of a first end of the inwardly facing curved front surface 3103 and the first S-shaped end face 3106 there is a concave surface 3108 and nearer the open mouth 3104, the first S-shaped portion forms a convex surface 3109 at the position of the first protruding portion 3101. At an intersection of the second end of the inwardly facing curved front surface 3103 and the second S-shaped end face 3107 there is a concave surface 3110 inside the cavity, and nearer to the open mouth, the second S-shaped portion forms a convex surface 3112 at the position of the second protruding portion 1301'.

Figure 31c herein illustrates schematically a cross-sectional view of a one-piece, blade for a demolition shear, along axis B-B of Figure 31a in accordance with a ninth embodiment of the present invention. The figure shows the "S" shaped end face 3106, and central apertures 3033, and a cut away view through the first and second longitudinal side walls and the front wall.

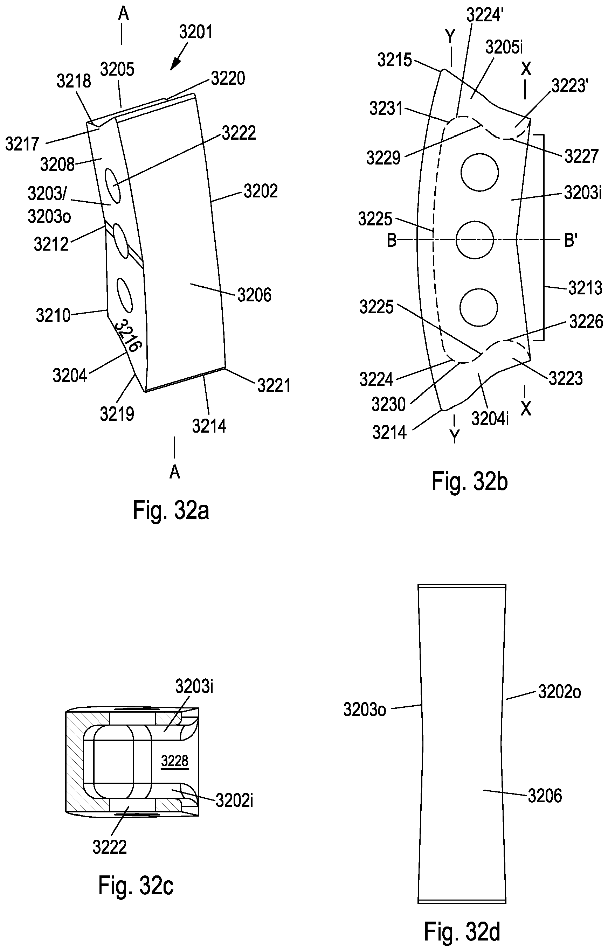

Figures 32a, 32b, 32c and 32d herein illustrate schematically a perspective view, a first and second cut-through view and a front view of blade for a demolition shear in accordance with a tenth embodiment of the present invention. The blade comprises a blade body 3201 comprising five walls: 3202, 3203, 3204, 3205 and 3206. The first 3202 and second 3203 longitudinal walls being arranged directly opposite one another and spaced apart from each other; and the third 3204 and fourth 3205 walls, being first and second end walls, also located opposite each other, and spaced apart from each other so that the first and second longitudinal walls extend between the first and second end walls 3204, 3205 to form a cavity there between. The first 3202 and second 3203 walls each comprising first and second sides. The first sides of the first and second walls having a flat inner face 3202i and 3203i respectively. The inner faces 3002i, 3003i being arranged substantially parallel to one another and facing each other across the cavity. The second sides of the first 3202 and second 3203 walls comprising outer faces 3202o, 3203o respectively. Each outer face comprising a first 3207, 3208 and second 3209, 3210 flat face which are joined at radii 3211 and 3212 respectively. Consequently, the outer faces 3202o, 3203o of sides 3202, 3203 appear synched or indented (see Figure 32d).

The third 3204 and fourth 3205 walls having an inner surface 3204i, 3205i respectively. The inner surfaces 3004i, 3005i facing each other at opposite ends of the cavity.

The first 3202 and second longitudinal 3203 walls each comprise an open outer edge which runs along the length of the first or second sides and defines opening 3213. The five sides 3202, 3203, 3204, 3205 and 3206 define a cavity for receiving the tang of a moving jaw or machine tool therein via opening 3213. The five walls of the blade body fit over the tang forming a protective shell which extends around each of the four sides of the tang, and across an outwardly facing front face of the tang. The blade is symmetrical about a plane extending between said first 3204 and second 3205 end walls.

The fifth side or front wall 3206 has a curved profile which extends continuously between each of the first 3202 and second 3203 longitudinal walls and the first and second end walls 3204, 3205. An intersection between the first end wall 3204 and the front wall 3206 defines a first piercing tip 3214 and an intersection between the second end wall 3205 and the front wall 3206 defines a second piercing tip 3215. The piercing tips 3214 and 3215 each comprising a rounded surface representing the radii of the intersection. The front wall comprises a convex outwardly facing surface.

The third end wall 3204 is substantially as described in Figures 30a and has an outer side comprising a series of flat faces arranged continuously. These flat faces extend between the first 3202 and second 3203 longitudinal walls and follow the irregular form of the lower edge 3216 of the first 3202 and second 3203 longitudinal walls.

The fourth end wall 3205 had an outer side also comprising a series of flat faces as described by reference to Figure 30b. A radius is present between the flat faces. Each of the flat faces and radii being arranged continuously and extending between the first 3202 and second 3203 longitudinal walls. Each of the flat faces and radii following the irregular form of the upper edge 3217 of the first 3202 and second 3203 longitudinal walls. First 3218 and second 3219 shearing edges and first 3220 and second 3221 guide edges are also provided.

The first 3202 and second 3203 walls each have three apertures 3222 which span between the inner, and outer sides of walls 3202 and 3203 and are capable of receiving fittings or fixings therethrough. The apertures may consequently have a thread for complementarity with appropriate fittings e.g. male and female bolts or threaded bolts. Alternatively, they may be unthreaded for compatibility with rods dowels or dowels and spring clips. However, it will be readily understood that alternative fasteners may be used.

Preferably, each of the sides are precision machined from a single block of steel. In other variations, the blade may be cast as a single piece component, 3D printed or a made from a fabricated construction welded as a single piece, and the edges and outer faces of the wall may be heat treated and/or face hardened.

Referring to Figure 32b, there is shown a cross-sectional view of a blade 3201 for a demolition shear, along axis A-A of Figures 32a in accordance with a tenth embodiment of the present invention. The cross-section shows the second longitudinal wall 3203 and first 3204 and second 3205 end walls. The inner surfaces 3204i, 3205i of the third and fourth end walls are visible. Each of the inner surfaces 3204i, 3205i of the third and fourth end walls comprises an inwardly facing protrusion 3223, 3223'. These protrusions merge continuously via curves 3224, 3224' into the wall 3225 of the front side 3026; demonstrating the single-piece precision machined nature of the demolition blade.

The first end wall 3204 (third side) is thicker than the thickness of the front wall (fifth wall 3206). The first end wall 3204 comprises a protruding portion 3223, which faces inwardly to the central cavity formed between the first and second longitudinal sides, the third and fourth walls 3204, 3205 and the fifth wall 3206 such that the open end of the cavity forms a mouth 3213 which is more constricted than the relatively wider internal dimension of the cavity between the third and fourth sides. The distance between opposed protrusions 3223, 3223' is smaller than the distance between the internal surfaces of lobes 3224, 3224'. The length of an internal perimeter around a cross-section X - X', looking in the direction of the arrow, on the inside of the cavity on a first side of the apertures in the side walls which draw around the first and second longitudinal side walls, and the third and fourth end walls and which is nearer to the open end of the cavity and between the open mouth of the cavity and the set of circular apertures in the longitudinal side walls, is shorter than the length of a second internal perimeter Y-Y', looking in the direction of the arrow, drawn around the inside of the cavity on the first and second longitudinal side walls and the third and fourth end walls deeper into the cavity, and beyond the apertures in the longitudinal sides of the body, so that the protrusions 3223, 3223' form a restricted area entrance 3213 to the cavity, compared to the area of the cavity as viewed in the same direction, deeper within the cavity and nearer to the front wall 3206. When inserting the tang into the cavity, the tang must be passed through the open mouth 3213, and past the projecting convex portions 3226, 3227.

As viewed from inside, the internal cavity comprises a relatively narrower entrance portion 3213 between the first and second convex portions 3226, 3227 which leads into a more cavernous bulged section inside the blade outer shell comprising first and second longitudinal side walls, first and second end walls, and the front wall. The central cavity region is formed by the first to fifth walls 3202 - 3206; a concave inwardly facing curved front surface on the inside of the front side (fifth side 3206); and first a substantially "S" shaped end face 3228 facing inwardly from the third side 3204; a second substantially" S" shaped surface 3229 at the opposite end of the cavity; the first and second S - shaped surfaces forming the first and second protruding portions 3223, 3223' respectively. At an intersection of a first end of the inwardly facing curved front surface 3225 and the first S-shaped end face 3228 there is a concave surface 3230 and nearer the open mouth 3213, the first S-shaped portion forms a convex surface 3226 at the position of the first protruding portion 3223. At an intersection of the second end of the inwardly facing curved front surface 3225 and the second S-shaped end face 3229 there is a concave surface 3231 inside the cavity, and nearer to the open mouth, the second S-shaped portion 3229 forms a convex surface 3227' at the position of the second protruding portion 3223'.

Figure 31c herein illustrates schematically a cross-sectional view of a one-piece blade for a demolition shear, along axis B-B of Figure 32b in accordance with a tenth embodiment of the present invention. The figure shows the "S" shaped end face 3228, and central apertures 3222, and a cut away view through the first and second longitudinal side walls and the front wall.

Referring to Figure 32d there is shown a front view of a blade in accordance with a tenth embodiment of the invention. The synched in outer sides 3202o and 3203o of walls 3202 and 3203 respectively are visible.

It will be readily understood that various modifications of the invention may be apparent to those skilled in the art. For example, any of the single-piece embodiments disclosed herein may be formed from a cast moulded piece, a machined piece, a precision machined part, a 3D printed part or fabricated construction of welded parts to form a one-part blade.

A method of manufacturing a blade for a demolition shear, comprising forming the single-piece blade body as a single machined piece is therefore also disclosed.

A method of manufacturing a blade for a demolition shear, comprising forming the single-piece blade body as a single casting is also disclosed.

A method of manufacturing a blade for a demolition shear, comprising forming the single-piece blade body by 3D printing is also disclosed.

A method of manufacturing a blade for a demolition shear, said method comprising forming said body as a single welded fabrication is also taught.

A person skilled in the art would readily appreciate that the single-piece demolition blade may have a curved rectangle form i.e. the blade may not include notch or radii 409, 2008, 2122 which is a result of the machining of two flat edges 402a/402b, 403a/403b, 2002a/2002b, 2003a/2003b, 2102a/2102b or 2103a/2103b. Flat edges 402a/402b, 403a/403b, 2002a/2002b, 2003a/2003b, 2102a/2102b or 2103a/2103b are to aid in manufacturing, and maintain the tool parallel to the curved or multi flat outer front face 406, 2006 or 2106. This reduces the tool length required to cut out the cavity of the single piece blade. However, it will be readily understood that any of the edge pairs 402a/402b, 403a/403b, 2002a/2002b, 2003a/2003b 2102a/2102b or 2103a/2103b could be replaced with a single flat, in which case radii 409, 2008, 2122 would not be required.

When in use with a demolition shears it will also be understood that the blade set of the lower jaw may be welded into a weldment coupled to the boom of the excavator, or vehicle. The weldment may support the linear actuator and the pivoting upper jaw through attachment to the boom of the machinery or vehicle by a mounting bracket and fasteners.

It will also be appreciated that various modification to the tang, which is not part of the invention, may be apparent which reduces the width of a conventional tang such that the blade may be inserted at its narrowest end over the tang of the moving jaw or machine tool.

## Claims

1. A blade for a demolition shear, said blade comprising:
a first longitudinal side wall (402, 1702, 2002, 2102, 2502, 3002, 3202);
a second longitudinal side wall (403, 1703, 2003, 2103, 2503, 3003, 3203) spaced apart from said first longitudinal side wall;
a first end wall (404, 1704, 2004, 2104, 2504, 3004, 3204) extending between a first end of said first longitudinal side wall and a first end of said second longitudinal side wall;
a second end wall (405, 1705, 2005, 2105, 2505, 3005, 3205) extending between the second end of said first longitudinal side wall and a second end of said second longitudinal side wall; and
a front wall (406, 1706, 2006, 2106, 2506, 3006, 3206) which extends between said first and second end walls and between said first and second longitudinal side walls;
said first and second longitudinal side walls, said first and second end walls, and said front wall forming at least one cavity there between;
an intersection between said first end wall (404, 1704, 2004, 2104, 2504, 3004, 3204) and said front wall (406, 1706, 2006, 2106, 2506, 3006, 3206) defining a first piercing tip (413, 1714, 2017, 2113, 2513, 3018, 3214); and
an intersection between said second end wall (405, 1705, 2005, 2105, 2505, 3005, 3205) and said front wall (406, 1706, 2005, 2506, 3006, 3206) defining a second piercing tip (414, 1715, 2018, 2114, 2514, 3019, 3215);
said first and second longitudinal side walls said first and second end walls and said front wall being formed as a single body; and
**characterised in that** each of said first and second end walls comprises a corresponding respective protrusion which faces inwardly into said at least one cavity (602, 602', 1801, 1801', 2130, 2130', 2701, 2701', 3101, 3101', 3223, 3223');
said blade for a demolition shear being indexable between a first position and a second position;
wherein, in said first position, the first piercing tip is presented for piercing use and in the second position the second piercing tip is presented for piercing use.

2. A blade for a demolition shear according to any preceding claim wherein said first and second longitudinal side walls are arranged in parallel, directly opposite one another.

3. A blade for a demolition shear according to any preceding claim, wherein said first end wall has a first end wall thickness, and said second end wall has a second end wall thickness, and
wherein each of said first and second longitudinal side walls, extend over a distance in a direction between said first and second end walls, which is greater than a thickness of said first end wall and greater than a thickness of said second end wall.

4. A blade for demolition shear according to any preceding claim, wherein said front wall has a front wall thickness, and
wherein each of said first and second longitudinal side walls extend over a distance in a direction perpendicular to a front face of said front wall, which is greater than said front wall thickness.

5. A blade for a demolition shear according to any preceding claim wherein said first and said second longitudinal side walls are located opposite each other, and spaced apart from each other.

6. A blade for a demolition shear according to any preceding claim wherein the blade is indexable between a first position and a second position by rotation of the blade by 180°.

7. A blade for a demolition shear according to any one of the preceding claims, wherein the blade is symmetrical.

8. A blade for a demolition shear according to any of claims 1 to 6, wherein the blade is asymmetrical (2501).

9. A blade for demolition shear according to any one of the preceding claims, wherein said front wall extends continuously between said first and second end walls and continuously between said first and second longitudinal side walls.

10. A blade for a demolition shear according to any preceding claim further comprising first (309, 1716, 2023, 2125, 2801, 3036, 3218) and second (310, 1717, 2024, 2126, 2802, 3037, 3219) shearing edges.

11. A blade for a demolition shear according to any preceding claim further comprising first (311, 1718, 2025, 2127, 2803, 3038, 3220) and second (312, 1719, 2026, 2128, 2804, 3039, 3221) guide edges.

12. A blade for a demolition shear according to any preceding claim wherein the front wall (406, 1706, 2006, 3206) of the blade comprises a convex outwardly facing surface (1101, 1711) extending between said first (413, 1714, 3214) and said second (414, 1715, 3215) piercing tips.

13. A blade for a demolition shear according to any preceding claim wherein the front wall (406, 1706) of the blade comprises a flat, series of flats, convex or any combination thereof outwardly facing surface (1101, 1711) extending between said first (413, 1714) and said second (414, 1715) piercing tips.

14. A blade for a demolition shear according to any preceding claim wherein said first longitudinal side wall (402, 1702, 2002, 2102, 2502, 3002, 3202) comprises an inner face (402i, 1702i, 2002i, 2102i, 2502i, 3002i, 3202i) and said second longitudinal wall (403, 1703, 2003, 2103, 2503, 3003, 3203) comprises an inner face (403i, 1703i, 2003i, 2103i, 2503i, 3003i, 3203i)

15. A blade for a demolition shear according to claim 14 wherein said inner face of said first longitudinal side wall and said inner face of said second longitudinal wall face each other across said at least one cavity.

16. A blade for a demolition shear according to any preceding claim wherein said first end (404, 1704, 2004, 2104, 2504, 3004, 3204) and said second end (405, 1705, 2005, 2105, 2505, 3005, 3205) comprise inner surfaces (404i, 1704i, 2004i, 2104i, 2504i, 3004i, 3204i) and (405i, 1705i, 2005i, 2105i, 2505i, 3005i, 3205i) respectively.

17. A blade for a demolition shear according to claim 16 wherein said inner surface of the first end and said inner surface of second end face each other across said at least one cavity.

18. A blade for a demolition shear according any preceding claim wherein the blade comprises a body (1401, 1701) comprises 8 vertices (1301, 1720).

19. A blade for a demolition shear according any preceding claim wherein the blade comprises a body (2001) comprises 20 vertices (1 to 20).

20. A blade for a demolition shear according any preceding claim wherein said first piercing tip comprises an edge between the first end wall and the front wall.

21. A blade for a demolition shear according any preceding claim wherein said first piercing tip comprises a curved surface between the first end wall and the front wall.

22. A blade for a demolition shear according any of claims 1 to 20, wherein said first piercing tip comprises a flat surface between the first end wall and the front wall.

23. A blade for a demolition shear according any preceding claim wherein said second piercing tip comprises an edge between the second end wall and the front wall.

24. A blade for a demolition shear according any preceding claim wherein said second piercing tip comprises a curved surface between the second end wall and the front wall.

25. A blade for a demolition shear according any preceding claim wherein said second piercing tip comprises a flat surface between the second end wall and the front wall.

26. A blade for a demolition shear according any preceding claim wherein the blade body (401, 701,3201) comprises at least one aperture (408, 1721, 3222) for receiving a fixing there through for securing the blade to a tang of a moveable jaw.

27. A blade for a demolition shear according claim 26 wherein said at least one aperture (408, 1721) for receiving a fixing there through is located on the first (402, 1702) or second (403, 1703) longitudinal side wall of the blade.

28. A blade for a demolition shear according claim 26 wherein said at least one aperture (1203) for receiving a fixing there through is located on the front wall (406) of the blade body.

29. A blade for a demolition shear according to any of claims 26, 27 or 28 wherein said at least one aperture (408, 1721) for receiving a fixing there through is threaded (412).

30. A blade for a demolition shear according to any preceding claim wherein when fitted, the front wall (406, 1706) encloses a majority of the lower surface (803), two opposing side surfaces (804, 805), upper surface (806) and bridging front surface (807) of a tang (802) of the moveable jaw of a demolition tool.

31. A method of manufacturing a blade for a demolition shear, said blade according to any preceding claim, comprising forming said body (401, 1701) as a single machined piece, as a single casting, or by 3D printing.

32. A method of manufacturing a blade for a demolition shear, said blade according to any of claims 1 to 30, comprising forming said body as a single welded fabrication.

33. A blade for a demolition shear according to any of claims 1 to 30 wherein said at least one cavity comprises an open ended mouth portion (407, 1707) having an inner perimeter extending around said mouth portion, which is smaller than an inner perimeter extending around a main body of said at least one cavity as viewed in a direction perpendicular to an inwardly facing surface of said front wall.

34. A blade for a demolition shear according to any of claims 1 to 30 and 33 wherein said protrusion which faces inwardly into said at least one cavity is a curved protrusion (602, 602', 1801, 1801', 2130, 2130', 2701, 2701', 3101, 3101', 3223, 3223').

35. A blade for a demolition shear according to any of claims 1 to 30, 33 and 34 wherein a said protrusion which faces inwardly into said at least one cavity is curved, flat, a series of flats or any combination thereof (602, 602', 1801, 1801', 2130, 2130', 2701, 2701', 3101, 3101', 3223, 3223').

36. A blade for a demolition shear according to claim 35 wherein each protrusion which faces inwardly into said at least one cavity is curved, flat, a series of flats, or any combination thereof (602, 602', 1801, 1801', 2130, 2130', 2701, 2701', 3101, 3101', 3223, 3223').

37. A blade for a demolition shear according to any of claims 1 to 30 and 33 to 36 wherein the front wall (2106) of the blade comprises three flat surfaces (2109, 2110, 2111) extending between said first (2113) and said second (2114) piercing tips.

38. A blade for a demolition shear according to any of claims 1 to 30 and 33 to 37 wherein the front wall of the blade comprises two flat surfaces (3015, 3016).

39. A blade according to claim 38 wherein said two flat surfaces are arranged at an angle into a ridge (3017).

40. A blade according to any of claims 1 to 30 and 33 to 39 wherein the first end (3004, 3204) comprises a series of flats (3022, 3023, 3024, 3026, 3026)

41. A blade according to any of claims 1 to 30 and 33 to 40 wherein the second end (3005, 3205) comprises a series of flats (3028, 3029, 3030) and a radii (3031).

42. A kit of parts comprising a blade for a demolition shear according to any of claims 1 to 30 and 33 to 41 and fixings.

43. A kit of parts according to claim 42 wherein the fixings are selected from any of the following: bolts; fitted bolts; complementary male and female threaded bolts; fixed bolts; barrel nuts and fixing bolts; dowels; or dowels and spring clips.

44. A demolition shear comprising a blade for a demolition shear according to any of claims 1 to 30 and 33 to 41.

## Patentansprüche

1. Klinge für eine Abbruchschere, wobei die Klinge Folgendes umfasst:
eine erste Längsseitenwand (402, 1702, 2002, 2102, 2502, 3002, 3202);
eine zweite Längsseitenwand (403, 1703, 2003, 2103, 2503, 3003, 3203), die von der ersten Längsseitenwand beabstandet ist;
eine erste Stirnwand (404, 1704, 2004, 2104, 2504, 3004, 3204), die sich zwischen einem ersten Ende der ersten Längsseitenwand und einem ersten Ende der zweiten Längsseitenwand erstreckt;
eine zweite Stirnwand (405, 1705, 2005, 2105, 2505, 3005, 3205), die sich zwischen dem zweiten Ende der ersten Längsseitenwand und einem zweiten Ende der zweiten Längsseitenwand erstreckt; und
eine Frontwand (406, 1706, 2006, 2106, 2506, 3006, 3206), die sich zwischen der ersten und der zweiten Stirnwand und zwischen der ersten und der zweiten Längsseitenwand erstreckt;
wobei die erste und die zweite Längsseitenwand, die erste und die zweite Stirnwand und die Frontwand mindestens einen Hohlraum dazwischen bilden;
eine Schnittstelle zwischen der ersten Stirnwand (404, 1704, 2004, 2104, 2504, 3004, 3204) und der Frontwand (406, 1706, 2006, 2106, 2506, 3006, 3206), die eine erste Durchstoßspitze (413, 1714, 2017, 2113, 2513, 3018, 3214) definiert; und
eine Schnittstelle zwischen der zweiten Stirnwand (405, 1705, 2005, 2105, 2505, 3005, 3205) und der Frontwand (406, 1706, 2005, 2506, 3006, 3206), die eine zweite Durchstoßspitze (414, 1715, 2018, 2114, 2514, 3019, 3215) definiert;
wobei die erste und die zweite Längsseitenwand, die erste und die zweite Stirnwand und die Frontwand als ein einziger Körper gebildet sind; und
**dadurch gekennzeichnet, dass** jede von der ersten und der zweiten Stirnwand einen entsprechenden jeweiligen Vorsprung umfasst, der nach innen in den mindestens einen Hohlraum (602, 602', 1801, 1801', 2130, 2130', 2701, 2701', 3101, 3101', 3223, 3223') gewandt ist;
wobei die Klinge für eine Abbruchschere zwischen einer ersten Position und einer zweiten Position indexierbar ist;
wobei die erste Durchstoßspitze in der ersten Position zum Durchstechungsgebrauch präsentiert wird und die zweite Durchstoßspitze in der zweiten Position zum Durchstechungsgebrauch präsentiert wird.

2. Klinge für eine Abbruchschere nach einem der vorhergehenden Ansprüche, wobei die erste und die zweite Längsseitenwand parallel und direkt gegenüberliegend zueinander angeordnet sind.

3. Klinge für eine Abbruchschere nach einem der vorhergehenden Ansprüche, wobei die erste Stirnwand eine erste Stirnwanddicke aufweist und die zweite Stirnwand eine zweite Stirnwanddicke aufweist und
wobei sich jede von der ersten und der zweiten Längsseitenwand über eine Entfernung in einer Richtung zwischen der ersten und der zweiten Stirnwand erstreckt, die größer als eine Dicke der ersten Stirnwand und größer als eine Dicke der zweiten Stirnwand ist.

4. Klinge für eine Abbruchschere nach einem der vorhergehenden Ansprüche, wobei die Frontwand eine Frontwanddicke aufweist und
wobei sich jede von der ersten und der zweiten Längsseitenwände über eine Entfernung in einer Richtung senkrecht zu einer frontalen Fläche der Frontwand erstreckt, die größer ist als die Frontwanddicke.

5. Klinge für eine Abbruchschere nach einem der vorhergehenden Ansprüche, wobei sich die erste und die zweite Längsseitenwand einander gegenüberliegend befinden und voneinander beabstandet sind.

6. Klinge für eine Abbruchschere nach einem der vorhergehenden Ansprüche, wobei die Klinge durch eine Drehung der Klinge um 180° zwischen einer ersten Position und einer zweiten Position indexierbar ist.

7. Klinge für eine Abbruchschere nach einem der vorhergehenden Ansprüche, wobei die Klinge symmetrisch ist.

8. Klinge für eine Abbruchschere nach einem der Ansprüche 1 bis 6, wobei die Klinge asymmetrisch (2501) ist.

9. Klinge für eine Abbruchschere nach einem der vorhergehenden Ansprüche, wobei sich die Frontwand durchgehend zwischen der ersten und der zweiten Stirnwand und durchgehend zwischen der ersten und der zweiten Längsseitenwand erstreckt.

10. Klinge für eine Abbruchschere nach einem der vorhergehenden Ansprüche, ferner umfassend eine erste (309, 1716, 2023, 2125, 2801, 3036, 3218) und eine zweite (310, 1717, 2024, 2126, 2802, 3037, 3219) Scherkante.

11. Klinge für eine Abbruchschere nach einem der vorhergehenden Ansprüche, ferner umfassend eine erste (311, 1718, 2025, 2127, 2803, 3038, 3220) und eine zweite (312, 1719, 2026, 2128, 2804, 3039, 3221) Führungskante.

12. Klinge für eine Abbruchschere nach einem der vorhergehenden Ansprüche, wobei die Frontwand (406, 1706, 2006, 3206) der Klinge eine konvexe, nach außen gewandte Oberfläche (1101, 1711) umfasst, die sich zwischen der ersten (413, 1714, 3214) und der zweiten (414, 1715, 3215) Durchstoßspitze erstreckt.

13. Klinge für eine Abbruchschere nach einem der vorhergehenden Ansprüche, wobei die Frontwand (406, 1706) der Klinge eine flache, eine Reihe von flachen, eine konvexe nach außen gewandte Oberfläche (1101, 1711) oder eine beliebige Kombination davon umfasst, die sich zwischen der ersten (413, 1714) und der zweiten (414, 1715) Durchstoßspitze erstreckt.

14. Klinge für eine Abbruchschere nach einem der vorhergehenden Ansprüche, wobei die erste Längsseitenwand (402, 1702, 2002, 2102, 2502, 3002, 3202) eine Innenfläche (402i, 1702i, 2002i, 2102i, 2502i, 3002i, 3202i) umfasst und die zweite Längswand (403, 1703, 2003, 2103, 2503, 3003, 3203) eine Innenfläche (403i, 1703i, 2003i, 2103i, 2503i, 3003i, 3203i) umfasst.

15. Klinge für eine Abbruchschere nach Anspruch 14, wobei die Innenfläche der ersten Längsseitenwand und die Innenfläche der zweiten Längswand über den mindestens einen Hohlraum hinweg einander zugewandt sind.

16. Klinge für eine Abbruchschere nach einem der vorhergehenden Ansprüche, wobei das erste Ende (404, 1704, 2004, 2104, 2504, 3004, 3204) und das zweite Ende (405, 1705, 2005, 2105, 2505, 3005, 3205) jeweils innere Oberflächen (404i, 1704i, 2004i, 2104i, 2504i, 3004i, 3204i) und (405i, 1705i, 2005i, 2105i, 2505i, 3005i, 3205i) umfassen.

17. Klinge für eine Abbruchschere nach Anspruch 16, wobei die innere Oberfläche des ersten Endes und die innere Oberfläche des zweiten Endes über den mindestens einen Hohlraum hinweg einander zugewandt sind.

18. Klinge für eine Abbruchschere nach einem der vorhergehenden Ansprüche, wobei die Klinge einen Körper (1401, 1701) umfasst, der 8 Eckpunkte (1301, 1720) umfasst.

19. Klinge für eine Abbruchschere nach einem der vorhergehenden Ansprüche, wobei die Klinge einen Körper (2001) umfasst, der 20 Eckpunkte (1 bis 20) umfasst.

20. Klinge für eine Abbruchschere nach einem der vorhergehenden Ansprüche, wobei die erste Durchstoßspitze eine Kante zwischen der ersten Stirnwand und der Frontwand umfasst.

21. Klinge für eine Abbruchschere nach einem der vorhergehenden Ansprüche, wobei die erste Durchstoßspitze eine gekrümmte Oberfläche zwischen der ersten Stirnwand und der Frontwand umfasst.

22. Klinge für eine Abbruchschere nach einem der Ansprüche 1 bis 20, wobei die erste Durchstoßspitze eine flache Oberfläche zwischen der ersten Stirnwand und der Frontwand umfasst.

23. Klinge für eine Abbruchschere nach einem der vorhergehenden Ansprüche, wobei die zweite Durchstoßspitze eine Kante zwischen der zweiten Stirnwand und der Frontwand umfasst.

24. Klinge für eine Abbruchschere nach einem der vorhergehenden Ansprüche, wobei die zweite Durchstoßspitze eine gekrümmte Oberfläche zwischen der zweiten Stirnwand und der Frontwand umfasst.

25. Klinge für eine Abbruchschere nach einem der vorhergehenden Ansprüche, wobei die zweite Durchstoßspitze eine flache Oberfläche zwischen der zweiten Stirnwand und der Frontwand umfasst.

26. Klinge für eine Abbruchschere nach einem der vorhergehenden Ansprüche, wobei der Klingenkörper (401, 701, 3201) mindestens einen Durchbruch (408, 1721, 3222) zum Aufnehmen einer Befestigung dadurch zum Sichern der Klinge an einem Zapfen einer bewegbaren Backe umfasst.

27. Klinge für eine Abbruchschere nach Anspruch 26, wobei sich der mindestens eine Durchbruch (408, 1721) zum Aufnehmen einer Befestigung dadurch an der ersten (402, 1702) oder der zweiten (403, 1703) Längsseitenwand der Klinge befindet.

28. Klinge für eine Abbruchschere nach Anspruch 26, wobei sich der mindestens eine Durchbruch (1203) zum Aufnehmen einer Befestigung dadurch an der Frontwand (406) des Klingenkörpers befindet.

29. Klinge für eine Abbruchschere nach einem der Ansprüche 26, 27 oder 28, wobei der mindestens eine Durchbruch (408, 1721) zum Aufnehmen einer Befestigung dadurch mit einem Gewinde (412) versehen ist.

30. Klinge für eine Abbruchschere nach einem der vorhergehenden Ansprüche, wobei im eingebauten Zustand die Frontwand (406, 1706) einen Großteil der unteren Oberfläche (803), zwei gegenüberliegende seitliche Oberflächen (804, 805), eine obere Oberfläche (806) und eine überbrückende frontale Oberfläche (807) eines Zapfens (802) der bewegbaren Backe eines Abbruchwerkzeugs umschließt.

31. Verfahren zum Herstellen einer Klinge für eine Abbruchschere, wobei die Klinge einem der vorhergehenden Ansprüche entspricht, umfassend Bilden des Körpers (401, 1701) als ein einziges bearbeitetes Stück, als ein einziger Guss oder durch 3D-Drucken.

32. Verfahren zum Herstellen einer Klinge für eine Abbruchschere, wobei die Klinge einem der Ansprüche 1 bis 30 entspricht, umfassend Bilden des Körpers als einziges geschweißtes Bauteil.

33. Klinge für eine Abbruchschere nach einem der Ansprüche 1 bis 30, wobei der mindestens eine Hohlraum einen Mündungsabschnitt (407, 1707) mit offenem Ende umfasst, der einen Innenumfang aufweist, der sich um den Mündungsabschnitt erstreckt und der kleiner ist als ein Innenumfang, der sich um einen Hauptkörper des mindestens einen Hohlraums erstreckt, betrachtet in einer Richtung senkrecht zu einer nach innen gewandten Oberfläche der Frontwand.

34. Klinge für eine Abbruchschere nach einem der Ansprüche 1 bis 30 und 33, wobei der Vorsprung, der nach innen in den mindestens einen Hohlraum gewandt ist, ein gekrümmter Vorsprung (602, 602', 1801, 1801', 2130, 2130', 2701, 2701', 3101, 3101', 3223, 3223') ist.

35. Klinge für eine Abbruchschere nach einem der Ansprüche 1 bis 30, 33 und 34, wobei der Vorsprung, der nach innen in den mindestens einen Hohlraum gewandt ist, gekrümmt, flach, eine Reihe von Abflachungen oder eine beliebige Kombination davon ist (602, 602', 1801, 1801', 2130, 2130', 2701, 2701', 3101, 3101', 3223, 3223').

36. Klinge für eine Abbruchschere nach Anspruch 35, wobei jeder Vorsprung, der nach innen in den mindestens einen Hohlraum gewandt ist, gekrümmt, flach, eine Reihe von Abflachungen oder eine beliebige Kombination davon ist (602, 602', 1801, 1801', 2130, 2130', 2701, 2701', 3101, 3101', 3223, 3223').

37. Klinge für eine Abbruchschere nach einem der Ansprüche 1 bis 30 und 33 bis 36, wobei die Frontwand (2106) der Klinge drei flache Oberflächen (2109, 2110, 2111) umfasst, die sich zwischen der ersten (2113) und der zweiten (2114) Durchstoßspitze erstrecken.

38. Klinge für eine Abbruchschere nach einem der Ansprüche 1 bis 30 und 33 bis 37, wobei die Frontwand der Klinge zwei flache Oberflächen (3015, 3016) umfasst.

39. Klinge nach Anspruch 38, wobei die zwei flachen Oberflächen in einem Winkel zu einem Grat (3017) angeordnet sind.

40. Klinge nach einem der Ansprüche 1 bis 30 und 33 bis 39, wobei das erste Ende (3004, 3204) eine Reihe von Abflachungen (3022, 3023, 3024, 3026, 3026) umfasst.

41. Klinge nach einem der Ansprüche 1 bis 30 und 33 bis 40, wobei das zweite Ende (3005, 3205) eine Reihe von Abflachungen (3028, 3029, 3030) und Radien (3031) umfasst.

42. Teilesatz nach einem der Ansprüche, umfassend eine Klinge für eine Abbruchschere nach einem der Ansprüche 1 bis 30 und 33 bis 41 und Befestigungen.

43. Teilesatz nach Anspruch 42, wobei die Befestigungen aus beliebigen der Folgenden ausgewählt sind: Bolzen; Passbolzen; Bolzen mit komplementärem Außen- und Innengewinde; feste Bolzen; Zylindermuttern und Befestigungsbolzen; Dübeln; oder Dübeln und Federklammern.

44. Abbruchschere, umfassend eine Klinge für eine Abbruchschere nach einem der Ansprüche 1 bis 30 und 33 bis 41.

## Revendications

1. Lame pour une cisaille de démolition, ladite lame comprenant :
une première paroi latérale longitudinale (402, 1702, 2002, 2102, 2502, 3002, 3202) ;
une seconde paroi latérale longitudinale (403, 1703, 2003, 2103, 2503, 3003, 3203) espacée de ladite première paroi latérale longitudinale ;
une première paroi d'extrémité (404, 1704, 2004, 2104, 2504, 3004, 3204) s'étendant entre une première extrémité de ladite première paroi latérale longitudinale et une première extrémité de ladite seconde paroi latérale longitudinale ;
une seconde paroi d'extrémité (405, 1705, 2005, 2105, 2505, 3005, 3205) s'étendant entre la seconde extrémité de ladite première paroi latérale longitudinale et une seconde extrémité de ladite seconde paroi latérale longitudinale ; et
une paroi avant (406, 1706, 2006, 2106, 2506, 3006, 3206) qui s'étend entre lesdites première et seconde parois d'extrémité et entre lesdites première et seconde parois latérales longitudinales ;
lesdites première et seconde parois latérales longitudinales, lesdites première et seconde parois d'extrémité et ladite paroi avant formant au moins une cavité entre elles ;
une intersection entre ladite première paroi d'extrémité (404, 1704, 2004, 2104, 2504, 3004, 3204) et ladite paroi avant (406, 1706, 2006, 2106, 2506, 3006, 3206) définissant une première pointe de perçage (413, 1714, 2017, 2113, 2513, 3018, 3214) ; et
une intersection entre ladite seconde paroi d'extrémité (405, 1705, 2005, 2105, 2505, 3005, 3205) et ladite paroi avant (406, 1706, 2005, 2506, 3006, 3206) définissant une seconde pointe de perçage (414, 1715, 2018, 2114, 2514, 3019, 3215) ;
lesdites première et seconde parois latérales longitudinales, lesdites première et seconde parois d'extrémité et ladite paroi avant étant formées sous la forme d'un seul corps ; et
**caractérisé en ce que** chacune desdites première et seconde parois d'extrémité comprend une saillie respective correspondante qui est orientée vers l'intérieur dans ladite au moins une cavité (602, 602', 1801, 1801', 2130, 2130', 2701, 2701', 3101, 3101', 3223, 3223') ;
ladite lame pour une cisaille de démolition étant indexable entre une première position et une seconde position ;
dans ladite première position, ladite première pointe de perçage étant présentée pour une utilisation de perçage et dans la seconde position, ladite seconde pointe de perçage étant présentée pour une utilisation de perçage.

2. Lame pour une cisaille de démolition selon une quelconque revendication précédente, lesdites première et seconde parois latérales longitudinales étant agencées en parallèle, directement en face l'une de l'autre.

3. Lame pour une cisaille de démolition selon une quelconque revendication précédente, ladite première paroi d'extrémité possédant une première épaisseur de paroi d'extrémité, et ladite seconde paroi d'extrémité possédant une seconde épaisseur de paroi d'extrémité, et
chacune desdites première et seconde parois latérales longitudinales s'étendant sur une distance dans une direction entre lesdites première et seconde parois d'extrémité, qui est supérieure à une épaisseur de ladite première paroi d'extrémité et supérieure à une épaisseur de ladite seconde paroi d'extrémité.

4. Lame pour une cisaille de démolition selon une quelconque revendication précédente, ladite paroi avant possédant une épaisseur de paroi avant, et
chacune desdites première et seconde parois latérales longitudinales s'étendant sur une distance dans une direction perpendiculaire à une face avant de ladite paroi avant, qui est supérieure à ladite épaisseur de paroi avant.

5. Lame pour une cisaille de démolition selon une quelconque revendication précédente, lesdites première et seconde parois latérales longitudinales étant situées en face l'une de l'autre et espacées l'une de l'autre.

6. Lame pour une cisaille de démolition selon une quelconque revendication précédente, ladite lame étant indexable entre une première position et une seconde position par rotation de la lame de 180°.

7. Lame pour une cisaille de démolition selon l'une quelconque des revendications précédentes, ladite lame étant symétrique.

8. Lame pour une cisaille de démolition selon l'une quelconque des revendications 1 à 6, ladite lame étant asymétrique (2501).

9. Lame pour une cisaille de démolition selon l'une quelconque des revendications précédentes, ladite paroi avant s'étendant en continu entre lesdites première et seconde parois d'extrémité et en continu entre lesdites première et seconde parois latérales longitudinales.

10. Lame pour une cisaille de démolition selon une quelconque revendication précédente, comprenant en outre des premier (309, 1716, 2023, 2125, 2801, 3036, 3218) et second (310, 1717, 2024, 2126, 2802, 3037, 3219) bords de cisaillement.

11. Lame pour une cisaille de démolition selon une quelconque revendication précédente, comprenant en outre des premier (311, 1718, 2025, 2127, 2803, 3038, 3220) et second (312, 1719, 2026, 2128, 2804, 3039, 3221) bords de guidage.

12. Lame pour une cisaille de démolition selon une quelconque revendication précédente, ladite paroi avant (406, 1706, 2006, 3206) de la lame comprenant une surface convexe orientée vers l'extérieur (1101, 1711) s'étendant entre ladite première (413, 1714, 3214) et ladite seconde (414, 1715, 3215) pointe de perçage.

13. Lame pour une cisaille de démolition selon une quelconque revendication précédente, ladite paroi avant (406, 1706) de la lame comprenant une surface orientée vers l'extérieur (1101, 1711) plate ou convexe ou en une série de méplats ou une quelconque combinaison de celles-ci, s'étendant entre ladite première (413, 1714) et ladite seconde (414, 1715) pointe de perçage.

14. Lame pour une cisaille de démolition selon une quelconque revendication précédente, ladite première paroi latérale longitudinale (402, 1702, 2002, 2102, 2502, 3002, 3202) comprenant une face interne (402i, 1702i, 2002i, 2102i, 2502i, 3002i, 3202i) et ladite seconde paroi longitudinale (403, 1703, 2003, 2103, 2503, 3003, 3203) comprenant une face interne (403i, 1703i, 2003i, 2103i, 2503i, 3003i, 3203i).

15. Lame pour une cisaille de démolition selon la revendication 14, ladite face interne de ladite première paroi latérale longitudinale et ladite face interne de ladite seconde paroi longitudinale se faisant face à travers ladite au moins une cavité.

16. Lame pour une cisaille de démolition selon une quelconque revendication précédente, ladite première extrémité (404, 1704, 2004, 2104, 2504, 3004, 3204) et ladite seconde extrémité (405, 1705, 2005, 2105, 2505, 3005, 3205) comprenant des surfaces internes (404i, 1704i, 2004i, 2104i, 2504i, 3004i, 3204i) et (405i, 1705i, 2005i, 2105i, 2505i, 3005i, 3205i) respectivement.

17. Lame pour une cisaille de démolition selon la revendication 16, ladite surface interne de la première extrémité et ladite surface interne de la seconde extrémité se faisant face à travers ladite au moins une cavité.

18. Lame pour une cisaille de démolition selon une quelconque revendication précédente, ladite lame comprenant un corps (1401, 1701) comprenant 8 sommets (1301, 1720).

19. Lame pour une cisaille de démolition selon une quelconque revendication précédente, ladite lame comprenant un corps (2001) comprenant 20 sommets (1 à 20).

20. Lame pour une cisaille de démolition selon une quelconque revendication précédente, ladite première pointe de perçage comprenant un bord entre la première paroi d'extrémité et la paroi avant.

21. Lame pour une cisaille de démolition selon une quelconque revendication précédente, ladite première pointe de perçage comprenant une surface incurvée entre la première paroi d'extrémité et la paroi avant.

22. Lame pour une cisaille de démolition selon l'une quelconque des revendications 1 à 20, ladite première pointe de perçage comprenant une surface plane entre la première paroi d'extrémité et la paroi avant.

23. Lame pour une cisaille de démolition selon une quelconque revendication précédente, ladite seconde pointe de perçage comprenant un bord entre la seconde paroi d'extrémité et la paroi avant.

24. Lame pour une cisaille de démolition selon une quelconque revendication précédente, ladite seconde pointe de perçage comprenant une surface incurvée entre la seconde paroi d'extrémité et la paroi avant.

25. Lame pour une cisaille de démolition selon une quelconque revendication précédente, ladite seconde pointe de perçage comprenant une surface plane entre la seconde paroi d'extrémité et la paroi avant.

26. Lame pour une cisaille de démolition selon une quelconque revendication précédente, ledit corps (401, 701, 3201) de lame comprenant au moins une ouverture (408, 1721, 3222) destinée à recevoir une fixation à travers celle-ci pour fixer la lame à une soie d'une mâchoire mobile.

27. Lame pour une cisaille de démolition selon la revendication 26, ladite au moins une ouverture (408, 1721) destinée à recevoir une fixation à travers celle-ci étant située sur la première (402, 1702) ou la seconde (403, 1703) paroi latérale longitudinale de la lame.

28. Lame pour une cisaille de démolition selon la revendication 26, ladite au moins une ouverture (1203) destinée à recevoir une fixation à travers celle-ci étant située sur la paroi avant (406) du corps de lame.

29. Lame pour une cisaille de démolition selon l'une quelconque des revendications 26, 27 ou 28, ladite au moins une ouverture (408, 1721) destinée à recevoir une fixation à travers celle-ci étant filetée (412).

30. Lame pour une cisaille de démolition selon une quelconque revendication précédente, lorsqu'elle est montée, la paroi avant (406, 1706) entourant une majorité de la surface inférieure (803), deux surfaces latérales opposées (804, 805), la surface supérieure (806) et la surface avant (807) de pontage d'une soie (802) de la mâchoire mobile d'un outil de démolition.

31. Procédé de fabrication d'une lame pour une cisaille de démolition, ladite lame selon une quelconque revendication précédente, comprenant la formation dudit corps (401, 1701) sous la forme d'une seule pièce usinée, sous la forme d'une seule pièce moulée ou par impression 3D.

32. Procédé de fabrication d'une lame pour une cisaille de démolition, ladite lame selon l'une quelconque des revendications 1 à 30, comprenant la formation dudit corps sous la forme d'une fabrication soudée unique.

33. Lame pour une cisaille de démolition selon l'une quelconque des revendications 1 à 30 ladite au moins une cavité comprenant une partie d'embouchure à extrémité ouverte (407, 1707) possédant un périmètre interne s'étendant autour de ladite partie d'embouchure, qui est plus petit qu'un périmètre interne s'étendant autour d'un corps principal de ladite au moins une cavité tel que vu dans une direction perpendiculaire à une surface orientée vers l'intérieur de ladite paroi avant.

34. Lame pour une cisaille de démolition selon l'une quelconque des revendications 1 à 30 et 33
ladite saillie qui est orientée vers l'intérieur dans ladite au moins une cavité étant une saillie incurvée (602, 602', 1801, 1801', 2130, 2130', 2701, 2701', 3101, 3101', 3223, 3223').

35. Lame pour une cisaille de démolition selon l'une quelconque des revendications 1 à 30, 33 et 34
une dite saillie qui est orientée vers l'intérieur dans ladite au moins une cavité étant incurvée, plate, une série de méplats ou toute combinaison de celles-ci (602, 602', 1801, 1801', 2130, 2130', 2701, 2701', 3101, 3101', 3223, 3223').

36. Lame pour une cisaille de démolition selon la revendication 35, chaque saillie qui fait face vers l'intérieur dans ladite au moins une cavité étant incurvée, plate, une série de méplats, ou toute combinaison de ceux-ci (602, 602', 1801, 1801', 2130, 2130', 2701, 2701', 3101, 3101', 3223, 3223').

37. Lame pour une cisaille de démolition selon l'une quelconque des revendications 1 à 30 et 33 à 36
ladite paroi avant (2106) de la lame comprenant trois surfaces planes (2109, 2110, 2111) s'étendant entre ladite première (2113) et ladite seconde (2114) pointe de perçage.

38. Lame pour une cisaille de démolition selon l'une quelconque des revendications 1 à 30 et 33 à 37
ladite paroi avant de la lame comprenant deux surfaces planes (3015, 3016).

39. Lame selon la revendication 38, lesdites deux surfaces planes étant agencées selon un angle dans une arête (3017).

40. Lame selon l'une quelconque des revendications 1 à 30 et 33 à 39, ladite première extrémité (3004, 3204) comprenant une série de méplats (3022, 3023, 3024, 3026, 3026).

41. Lame selon l'une quelconque des revendications 1 à 30 et 33 à 40, ladite seconde extrémité (3005, 3205) comprenant une série de méplats (3028, 3029, 3030) et un rayon (3031).

42. Kit de pièces comprenant une lame pour une cisaille de démolition selon l'une quelconque des revendications 1 à 30 et 33 à 41 et des fixations.

43. Kit de pièces selon la revendication 42, lesdites fixations étant choisies parmi l'un quelconque des suivants : boulons ; boulons ajustés ; boulons filetés mâles et femelles complémentaires ; boulons fixes ; écrous à portée cylindrique et boulons de fixation ; chevilles ; ou chevilles et clips à ressort.

44. Cisaille de démolition comprenant une lame pour une cisaille de démolition selon l'une quelconque des revendications 1 à 30 et 33 à 41.
